(19) Europäisches Patentamt
European Patent Office
Office européen des brevets

(11) **EP 2 591 521 B1**

(12) **EUROPÄISCHE PATENTSCHRIFT**

(45) Veröffentlichungstag und Bekanntmachung des Hinweises auf die Patenterteilung:
**27.02.2019 Patentblatt 2019/09**

(21) Anmeldenummer: **11738613.6**

(22) Anmeldetag: **04.07.2011**

(51) Int Cl.:
*H01M 4/58* $^{(2010.01)}$        *H01M 4/66* $^{(2006.01)}$
*H01M 10/052* $^{(2010.01)}$        *C23C 22/36* $^{(2006.01)}$
*H01G 9/048* $^{(2006.01)}$        *H01M 4/02* $^{(2006.01)}$
*H01M 4/48* $^{(2010.01)}$        *H01G 11/46* $^{(2013.01)}$
*H01G 11/24* $^{(2013.01)}$        *H01G 11/50* $^{(2013.01)}$
*H01G 11/30* $^{(2013.01)}$        *H01M 4/485* $^{(2010.01)}$
*H01G 9/042* $^{(2006.01)}$

(86) Internationale Anmeldenummer:
**PCT/EP2011/003309**

(87) Internationale Veröffentlichungsnummer:
**WO 2012/003954 (12.01.2012 Gazette 2012/02)**

(54) **NEUE PHOSPHAT- UND SILIKAT-BASIERTE ELEKTRODENMATERIALIEN, INSBESONDERE FÜR LITHIUMIONEN-BATTERIEN UND LITHIUMKONDENSATOREN**

NEW PHOSPHATE- AND SILICATE-BASED ELECTRODE MATERIALS, MORE PARTICULARLY FOR LITHIUM ION BATTERIES AND LITHIUM CAPACITORS

NOUVEAUX MATÉRIAUX D'ÉLECTRODE À BASE DE PHOSPHATE ET DE SILICATE, EN PARTICULIER POUR DES BATTERIES LITHIUM-ION ET DES CONDENSATEURS AU LITHIUM

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.07.2010 DE 102010026613**

(43) Veröffentlichungstag der Anmeldung:
**15.05.2013 Patentblatt 2013/20**

(73) Patentinhaber: **Max-Planck-Gesellschaft zur Förderung**
**der Wissenschaften e.V.**
**80539 München (DE)**

(72) Erfinder:
• **KALLFASS, Christoph**
**74523 Schwäbisch-Hall (DE)**
• **SCHIER, Hermann**
**70563 Stuttgart (DE)**

(74) Vertreter: **Katzameyer, Michael**
**v. Bezold & Partner**
**Patentanwälte - PartG mbB**
**Akademiestraße 7**
**80799 München (DE)**

(56) Entgegenhaltungen:
EP-A1- 1 418 599        WO-A2-2007/035432
WO-A2-2010/054383        CN-A- 101 777 654
JP-A- 4 130 262        JP-A- 10 270 018

• CHUNG S ET AL: "Electronically conductive phospho-olivines as lithium storage electrodes", NATURE: INTERNATIONAL WEEKLY JOURNAL OF SCIENCE, NATURE PUBLISHING GROUP, UNITED KINGDOM, Bd. 1, 1. Oktober 2002 (2002-10-01), XP002426909, ISSN: 0028-0836 in der Anmeldung erwähnt
• DALAS E ET AL: "Polyaniline/zeolite as the cathode in a novel gel electrolyte primary dry cell", JOURNAL OF POWER SOURCES, ELSEVIER SA, CH, Bd. 128, Nr. 2, 5. April 2004 (2004-04-05) , Seiten 319-325, XP004495023, ISSN: 0378-7753, DOI: 10.1016/J.JPOWSOUR.2003.09.062
• ALAIN WALCARIUS: "Electroanalytical Applications of Microporous Zeolites and Mesoporous (Organo)Silicas: Recent Trends", ELECTROANALYSIS, Bd. 20, Nr. 7, 1. April 2008 (2008-04-01), Seiten 711-738, XP055034090, ISSN: 1040-0397, DOI: 10.1002/elan.200704144

**Beschreibung**

Die vorliegende Offenbarung betrifft neue Phosphat- und Silikat-basierte Elektrodenmaterialien, die insbesondere für Lithium-ionen-Sekundärbatterien und Elektrische-Doppelschicht-Konden-satoren (engl. Electric double layer condensator, ELDC), insbesondere Lithium-Kondensatoren, sowie andere elektrische und elektrochemische Speichervorrichtungen auf der Basis nicht-wässriger Systeme vorteilhaft einsetzbar sind.

Im letzten Jahrzehnt hat aus verschiedenen ökonomischen und ökologischen Gründen, nicht zuletzt zur Vermeidung einer Klimakatastrophe, die Entwicklung leistungsfähigerer, aber gleichzeitig kostengünstiger elektrischer Speichersysteme wie Batterien und Kondensatoren mit möglichst vorteilhaften chemischen, elektrischen und mechanischen Eigenschaften und guter Umweltverträglichkeit weltweit hohe Priorität bekommen. Zur Energiespeicherung werden einerseits Batteriesysteme eingesetzt wenn es auf die Speicherung von hohen Energiemengen über lange Zeit ankommt, andererseits werden Doppelschicht-Kondensatoren eingesetzt wenn eine Anwendung hohe Leistungsdichte und Zyklenfestigkeit verlangt.

Bei den Doppelschichtkondensatoren wird durch Anlegen einer elektrischen Spannung eine Helmholtz'sche Doppelschicht an beiden Elektroden ausgebildet, die Energie wird rein elektrostatisch (ohne Beteiligung von Redoxprozessen) gespeichert. Dieser Prozess ist sehr schnell, so dass EDLCs für Rekuperationstechniken (Energierückgewinnung aus Bremsenergie) geeignet sind. Allerdings lässt sich die Ladung nicht über längere Zeit speichern, da die Leckströme sehr hoch sind. Durch den Einsatz von hochporösen Elektrodenmaterialien (poröser Graphit) wird die effektive nutzbare Elektrodenfläche bei EDLCS im Vergleich zu einfachen Plattenkondensatoren um den Faktor 1000 und mehr gesteigert.

Der Einsatz von Graphitelektroden in EDLCS begrenzt die maximale Stromspannung auf 2,5 V. Diese Beschränkung gilt ebenfalls für die bekannten Lithium-Kondensatoren, die ebenfalls wie die EDLCs auf der Nutzung von porösen Kohlenstoff (Graphit) als Elektrodenmaterial beruhen, der die nutzbare Spannung auf 2,5 V begrenzt.

In Batterien wird die Energie elektrochemisch in Oxidations- bzw. Reduktionsprozessen gespeichert. Damit liegt die maximale Energiedichte bei Lithium-Ionen Batterien heute bei ungefähr 190 mAh/g. Die Selbstentladung kann dabei bis auf 10% pro Jahr begrenzt werden. Speziell bei Lithium-Ionen-Batterien kann nie die gesamte gespeicherte Energie wieder abgegeben werden, da beim Unterschreiten der Entladeschlussspannung von 2,5 V die Struktur des Kathodenmaterials zerstört wird.

In der Technik werden zunehmend die Vorteile beider Speichersysteme kombiniert, es werden zum Starten von großen Verbrennungsmotoren z. B. bei Booten oder Eisenbahnen Kondensatoren eingesetzt, da die Batterien allein nie die hohen Ströme beim Anlassen zur Verfügung stellen können. Bei Energierückgewinnung aus Bremsenergie müssen ebenfalls sehr hohe Energiemengen in kurzer Zeit gespeichert werden, was heutige Batterietechnik überfordert und daher werden Kondensatorbänke eingesetzt.

Aufgrund der unterschiedlichen Speicher- und Wirkungsprinzipien von Batterien und Kondensatoren und der damit jeweils verbundenen speziellen Materialanforderungen werden herkömmlicherweise unterschiedliche Materialien für diese beiden Arten von Speichersystemen eingesetzt.

Zur Entwicklung leistungsfähigerer Speichersysteme wurden unter anderem verschiedene neue Elektrodenmaterialien mit verbesserten Eigenschaften entwickelt und eingesetzt. Ein solches Material war synthetisch hergestelltes $LiFePO_4$, ein Orthophosphat, dessen elektrische Eigenschaften erstmals 1997 beschrieben wurden, und das sich inzwischen als ein bevorzugtes Kathodenmaterial für Lithiumionen-Batterien etabliert hat. Auch das natürlich vorkommende Mineral Triphylin (engl. "triphylite") mit der (vereinfachten) chemischen Formel $LiFe\text{-}PO_4$ hat sich als brauchbares Kathodenmaterial erwiesen (Ravet el al. in Journal of Power Sources, 2001, 97-98, 503-507). Diese $LiFePO_4$-Materialien haben eine Olivin-Struktur und die kommerziell verwendeten Varianten besitzen trotz ihrer prinzipiellen Eignung als Kathodenmaterial immer noch gewisse Nachteile und haben teilweise stark unterschiedliche Eigenschaften. Ein grundsätzlicher Nachteil besteht beispielsweise darin, dass bei diesen Materialien während der Lade- und Entladezyklen chemische und strukturelle Veränderungen stattfinden, welche mit der Zeit zu einer signifikanten und progressiven Verringerung der Speicherkapazität führen.

In der europäischen Patentanmeldung 08021669.0 wurde ein weiteres Elektrodenmaterial auf Phosphatbasis beschrieben, das die Struktur des Minerals Arrojadit aufweist und aus diesem beispielsweise durch eine Ionenaustauschbehandlung zur Einführung von Lithiumionen oder anderen gewünschten Ionen erhalten werden kann. Dieses Material ist den $LiFePO_4$-basierten Materialien hinsichtlich seiner physikalischen und elektrochemischen Eigenschaften beim Einsatz in Batterien überlegen und kann auch leicht, kostengünstig und umweltfreundlich hergestellt werden.

Trotzdem besteht weiterhin Bedarf für weitere Elektrodenmaterialien mit ebenso guten oder sogar besseren Eigenschaften, die vor allem für verschiedene elektrische und elektrochemische Speichervorrichtungen auf der Basis nicht-wässriger Systeme, insbesondere für sowohl Batterien als auch Kondensatoren, vorteilhaft einsetzbar sind.

Umfangreiche Unersuchungen der Erfinder führten zu der überraschenden Erkenntnis, dass ein breites Spektrum von kristallinen Phosphat- und Silikat-basierten Materialien mit untereinander verwandten Strukturen ausgezeichnete Eigen-schaften als Elektrodenmaterial in nicht-wässrigen Systemen aufweist und insbesondere für Lithiumionen-Sekundärbatterien und Lithiumionen-Kondensatoren sehr gut geeignet ist. Bei diesen Strukturen handelt es sich vorzugsweise um Hopeit- und Zeolithstrukturen.

Beide Strukturtypen weisen, unabhängig von der jeweiligen chemischen Zusammensetzung, strukturelle Gemeinsamkeiten auf. Sowohl in der Hopeit- als auch in den Zeolithstrukturen treten Koordinationspolyeder in Form von Tetraedern als zentrales Baumotiv auf. Tetraeder sind das ausschließliche Baumotiv der Zeolithstrukturen. Durch entsprechende Verknüpfung der Tetraeder lassen sich eine Vielzahl von unterschiedlichen Zeolithstrukturen mit verschiedenartigen Kanälen oder Hohlräumen herstellen (z.B. das Faserzeolith Mordenit mit eindimensionalen Kanälen oder das Würfelzeolith Chabasit mit einem dreidimensionalen Kanalsystem).

Im Gegensatz zu den Zeolithstrukturen enthält die Hopeitstruktur neben Tetraedern auch Oktaeder als weiteren Typ von Koordinationspolyedern. In der Hopeit-Struktur werden Ringe aus mehreren verknüpften Tetraedern gebildet, die periodisch schichtförmig angeordnet sind. Diese Schichten aus ringförmig angeordneten Tetraedern sind über Oktaeder bzw. quadratische Pyramiden miteinander verknüpft.

Das Mineral Hopeit ist ein Zinkphosphat mit der idealen chemischen Summenformel $Zn_3(PO_4)_2$ x $4\,H_2O$. Zinkphosphate werden zur Phosphatierung von Metallen und als Sensormaterialien ver-wendet. Als Elektrodenmaterial, nämlich als Zinkionen leitende lamellare Schicht auf einer Zn-Anode in einem wässrigen System, wurden sie bisher nur in einer einzigen Veröffent-lichung in Zusammenhang mit einer implantierbaren Elektrode für Herzschrittmacher genannt (WO 2007/035432 A2).

Zeolithe werden in der Technik unter anderem als reversible Ionenaustauscher in wässrigen Systemen eingesetzt, bei denen die bekannte Beweglichkeit der Gast-Ionen im Wirtsgitter ausgenützt wird. Allerdings sind bisher keine elektrischen Eigenschaften bei Zeolithen gefunden worden, die einen Einsatz als Elektrodenwerkstoff, z. B. als Kathodenmaterial in einer Lithiumionenbatterie oder als Elektrodenmaterial in einem ELDC oder anderen Kondensator, beispielsweise einem Lithium-Kondensator, insbesondere in einem nicht-wässrigen System, zuließen.

Die oben erörterte Aufgabe der Erfindung, nämlich die Bereitstellung neuer Elektrodenmaterialien mit ausgezeichneten physikalischen und elektrochemischen Eigenschaften in nicht-wässrigen Kondensatorsystemen, konnte somit durch die Verwendung der Phosphat- und Silikat-basierten Materialien wie in Anspruch 1 definiert sowie den Kondensator nach Anspruch 8 gelöst werden. Speziellere Aspekte und bevorzugte Ausführungsformen der Erfindung sind Gegenstand der abhängigen Ansprüche.

Gemäß Anspruch 1 wird als Elektrodenmaterial ein kristallines Material mit einer Struktur verwendet, welche mindestens umfasst

a) 2 bis 193 Atom-% strukturbildende Ionen M in Form einer $(MX_4)^{n-}$-Koordinationspolyeder umfassenden Gitterstruktur, wobei M aus einem oder mehreren Elementen der Gruppen 2-15 ausgewählt ist,

b) 8 bis 772 Atom-% Anionen X in Form einer $(MX_4)^{n-}$-Koordinationspolyeder umfassenden Gitterstruktur, wobei n = eine Zahl von 2-4, X aus einem oder mehreren Elementen der Gruppen 16 und 17 ausgewählt ist, vorzugsweise Sauerstoff ist, und ein Anteil von bis zu 25,01 % der Anionen X durch ein Halogenidion wie $F^-$ oder $Cl^-$ oder durch $OH^-$ ersetzt sein können,

c) 0 bis 5 Atom-% nicht-bewegliche strukturbildende Kationen von einem oder mehreren der Elemente der Gruppen 3-13 des Periodensystems und

d) > 0 bis 46 Atom-% bewegliche Kationen, ausgewählt aus Elementen der Gruppe 1 oder Gruppe 11 des Periodensystems, welche Struktur mindestens einen freien oder mit einer oder mehreren Spezies der beweglichen Kationen ganz oder teilweise gefüllten Kanal aufweist, der durch die Elementarzelle der Struktur hindurchgeht,

mit der Maßgabe, dass mindestens dann wenn mehr als 50 % der M-Atome P sind, die Struktur eine Hopeit- oder Zeolith-Gitterstruktur darstellt.

Erfindungsgemäß stellt die Struktur des kristallinen Materials eine Hopeit- oder Zeolith-Gitterstruktur dar. In allen diesen erfindungsgemäß geeigneten Strukturen bilden die $MO_4$-Koordinationspolyeder, zusammen mit den Koordinations-polyedern der nicht-austauschbaren strukturbildenden Kationen auf festen Gitterplätzen, ein starres Wirtsgitter, in dem zusätzlich offene Kanäle existieren, in denen bewegliche Kationen und Wasser eingelagert werden können. Da die Koordinationssphären in den Kanälen unvollständig sind, lassen sich diese Kationen auf elektrische oder chemische Weise austauschen. Die Mobilität dieser Kationen im elektrischen Feld eröffnet den Einsatz dieser Materialien als Elektrodenwerkstoffe.

Diese beweglichen Kationen sind vorzugsweise aus der Gruppe aus $Li^+$, $Na^+$, $K^+$ und $Ag^+$ ausgewählt und besonders bevorzugt ist $Li^+$.

Ein Vorteil der erfindungsgemäß verwendeten Materialien liegt darin, dass eine relativ große Menge der gewünschten beweglichen Kationen in diesen Kanälen gespeichert und darin bewegt werden kann, was zu einer hohen nutzbaren elektrischen Kapazität führt. Typischerweise kann das verwendete Elektrodenmaterial bis zu 46 Atom-%, spezieller bis zu 26 Atom-%, vorzugsweise 6 bis 15 Atom-%, des Materials an beweglichen Kationen enthalten.

Ein weiterer Vorteil besteht darin, dass das verwendete Material im Gegensatz zu kommerziell verwendeten Materialien wie $LiFePO_4$ auch nach wiederholten Lade- und Entladezyklen sowohl chemisch stabil als auch dimensionsstabil bleibt.

Damit ist die Speicherung und der Transport der jeweiligen beweglichen Ionen nicht beeinträchtigt und die elektrische Speicherkapazität bzw. nutzbare Entladekapazität bleibt auch nach einer großen Anzahl von Lade/Entladezyklen enthalten. Beispielsweise war die Ladekapazität eines mit Li-Ionen beladenen Hopeits nach mehreren hundert Zyklen praktisch unverändert und die Entladekapazität eines mit Li-Ionen beladenen Mordenits ebenfalls.

In der vorliegenden Anmeldung wird eine neue Klasse von Elektrodenmaterialien beschrieben, die sich sowohl als Elektrodenmaterialien von Doppelschicht-Kondensatoren, beispielsweise sog. "lithium ion capacitors" (LIC), mit nutzbaren Betriebsspannungen über 2,5 V und hohen Ladeströmen und Entladeströmen als auch für Lithiumionen-Batterien (nicht Teil der beanspruchten Erfindung) sehr vorteilhaft einsetzen lassen.

Durch den Nachweis der Eignung von Zeolithen als Elektrodenmaterial wird eine völlig neue Substanzklasse erschlossen, bei der sich relevante chemische und physikalische Eigenschaften wie Zusammensetzung, Kanal-durchmesser etc. in weiten Grenzen maßgeschneidert einstellen lassen und eine systematische Optimierung des jeweiligen Systems ermöglichen.

Mit den Begriffen "Phosphat-basierte Materialien" und "Silikat-basierte Materialien" werden hier Materialien mit der in Anspruch 1 definierten Zusammensetzung bezeichnet, bei denen mehr als 50 % der M-Atome P bzw. Si sind.

Elemente der Gruppen 13-15 des Periodensystems können sich in den erfindungsgemäß geeigneten Strukturen, insbesondere Hopeit- oder Zeolith-Strukturen, gegenseitig ersetzen und es sind prinzipiell stufenlose Übergänge von 0-100 % möglich. Der Ersatz von Si durch Al führt zu den bekannten Alumosilikaten, währen der analoge Ersatz von P durch Al die Alumophosphate ergibt. Auch die Sauerstoffatome der $MO_4$-Koordinationspolyeder können teilweise, insbesondere bis zu etwa 25,01 %, durch andere Anionen wie Halogenidionen, vorzugsweise F und Cl⁻ oder durch OH⁻ ohne Verlust der Ausgangsstruktur ersetzt sein.

Die nicht-beweglichen strukturbildenden Kationen von einem oder mehreren Elementen der Gruppen 3-13 des Periodensystems in den erfindungsgemäß verwendeten Materialien mit Hopeit- oder Zeolithstruktur, sind vorzugsweise aus der Gruppe aus Zn, Mn, Fe, Co, Ni, Cr, V, Sc, Ti und Cu und Kombinationen davon ausgewählt. Besonders bevorzugt ist Zn oder eine Kombination von Zn mit anderen Übergangsmetallkationen. Auch ein teilweiser Ersatz der strukturbildenden Übergangsmetallionen durch Metallionen der Gruppen 13 und 14 des Periodensystems wie beispielsweise Al, Ga, Si und Ge ist möglich. In den Kanälen der Zeolithe exisieren eine Vielzahl von theoretisch besetzbaren Positionen. So werden z. B. beim Zeolith Chabasit 46 dieser Positionen tatsächlich besetzt (im Falle des calcium- und wasserhaltigen Chabasits mit sechs $Ca^{2+}$-Ionen und 40 Wassermolekülen oder im Falle des dehydrierten calciumhaltigen Chabasits nur mit sechs $Ca^{2+}$-Ionen). Das Wasser kann mindestens teilweise durch bewegliche Kationen wie oben definiert, insbesondere Li, ersetzt werden.

Die Hopeit-Struktur leitet sich von dem bekannten Mineral Hopeit, einem Zinkphosphat, mit dieser kristallographischen Struktur ab und wurde zunächst nur für phosphat-basierte Materialien beobachtet. Inzwischen sind auch Silikat-Analoga mit dieser Struktur bekannt, z. B. Hodgkinsonit $Zn_2Mn(SiO_4)$ x $OH_2$ und Arsenat-Analoga mit dieser Struktur bekannt, z. B. Rollandit $Cu_3(AsO_4)$ x 4 $H_2O$.

Die Erfinder konnten überraschenderweise zeigen, dass ein phosphat-basiertes Material mit Hopeit-Struktur auch in eine Mordenit-Struktur (d. h. in eine Zeolith-Struktur) überführt werden kann.

Die Zeolith-Strukturen sind bekannte Strukturen für überwiegend silikat-basierte Materialien, insbesondere einschließlich der Alumosilikate. Spezielle Vertreter dieses allgemeinen Strukturtyps, welche erfindungsgemäß als Elektrodenmaterial einsetzbar sind, sind aus einer der folgenden Strukturen gemäß der Nomenklatur der International Zeolite Association (ZA) (http://www.iza-structure.org/) ausgewählt: ABW (BW)A-Li, ANA (Analcim), CAN (Cancrinit), CHA (Chabasit), ERI (Erionit), FAU (Faujasit), GIS (Gismondin; engl. gismondite), GME (Gmelinit), HEU (Heulandit), MOR (Mordenit), NAT (Natrolith), PHI (Phillipsit) oder SOD (Sodalith). Die in Klammern angegebenen Bezeichnungen sind diejenigen von bekannten Mineralien, bei denen der jeweilige Strukturtyp beobachtet wurde. Wie jedoch aus den obigen Ausführungen ersichtlich, sind mannigfaltige Ersetzungen der verschiedenen Komponenten unter Erhalt der Grundstruktur möglich und die erfindungsgemäß geeigneten Strukturtypen sind daher, im Rahmen der oben angegebenen Grenzen, weitgehend unabhängig von der speziellen chemischen Zusammensetzung.

Im folgenden wird die chemische Zusammensetzung der jeweiligen Gerüststrukturen (ohne Kationen bzw. Wassermoleküle in den Hohlräumen) der verschiedenen erfindungsgemäß verwendbaren Strukturtypen näher beschrieben.

Zeolith-Typ ABW (Typ-Material: Li-A (Barrer and White) beschrieben in Barrer, R. M. & White, E. A. D. in J. Chem. Soc. 1951, 1267-1278))

Allg. Formel des Gerüstes (ohne Kationen bzw. Wassermoleküle in den Hohlräumen) : $[X_4Y_4O_{16}]$

X = ein oder mehrere Elemente aus den Gruppen 3-12 (z. B. Co, Zn), der Gruppe 2 (z. B. Be, Mg) oder der Gruppe 13 (z. B. Al, Ga) des Periodensystems

Y = ein oder mehrere Elemente der Gruppe 14 (z. B. Si, Ge) oder der Gruppe 15 (z. B. P, As) des Periodensystems Weitere Materialien mit gleichem strukturellen Aufbau: UCSB-3

Zeolith-Typ ANA (Typ-Material: Analcim)

Allg. Formel des Gerüstes (ohne Kationen bzw. Wassermoleküle in den Hohlräumen) : $[X_{16}Y_{32}O_{96}]$
X = ein oder mehrere Elemente aus den Gruppen 3-12 (z. B. Co, Zn), der Gruppe 2 (z. B. Be, Mg) oder der Gruppe 13 (z. B. Al, Ga) des Periodensystems
Y = ein oder mehrere Elemente der Gruppe 14 (z. B. Si, Ge) oder der der Gruppe 15 (z.B. P, As) des Periodensystems
Weitere Materialien und Mineralien (letztere gekennzeichnet durch Unterstreichung) mit gleichem strukturellen Aufbau:
Al-PO-24 (Aluminophosphate-twenty four), AlPO$_4$-Pollucit, Amminoleucit, Ca-D, Leucit, Hsianghualit, Na-B, Pollucit, Wairakit

Zeolith-Typ CAN (Typ-Material: Cancrinit)

Allg. Formel des Gerüstes (ohne Kationen bzw. Wassermoleküle in den Hohlräumen) : $[X_6Y_6O_{24}]$
X = ein oder mehrere Elemente aus den Gruppen 3-12 (z. B. Co, Zn), der Gruppe 2 (z. B. Be), oder der Gruppe 13 (z. B. Al, Ga) des Periodensystems
Y = ein oder mehrere Elemente der Gruppe 14 (z. B. Si, Ge) oder der Gruppe 15 (z. B. P) des Periodensystems
Patentierte Materialien: ECR-5 (E. Patent A-190,90, (1986)) Weitere Materialien und Mineralien (letztere gekennzeichnet durch Unterstreichung) mit gleichem strukturellen Aufbau: Davyne, Microsommit, Tiptopit, Vishnevit

Zeolith-Typ CHA (Typ-Material: Chabasit)

Allg. Formel des Gerüstes (ohne Kationen bzw. Wassermoleküle in den Hohlräumen) : $[X_{12}Y_{24}O_{72}]$
X = ein oder mehrere Elemente aus den Gruppen 3-12 (z. B. Co, Zn), der Gruppe 2 (z. B. Mg) oder der Gruppe 13 (z. B. Al) des Periodensystems
Y = ein oder mehrere Elemente der Gruppe 14 (z. B. Si, Ge) oder der der Gruppe 15 (z. B. P) des Periodensystems
Patentierte Materialien: Linde D (U. S. Patent 2,950,952, (1960)), Linde R (Brit. Patent 841,812, (1960)), LZ-218 (U. S. Patent 4,333,859, (1982)), Phi (U. S. Patent 4,124,686, (1978)), SSZ-13 (Standard Oil Synthetic Zeolite - thirteen; US Patent 4,544,538, (1985)), SSZ-62 (Standard Oil Synthetic Zeolite - sixty-two; U. S. Patent 6,709,644 B2, (2004)) Weitere Materialien und Mineralien (letztere gekennzeichnet durch Unterstreichung) mit gleichem strukturellen Aufbau: Al-PO-34 (Aluminophosphate-thirty four), DAF-5 (Davy Faraday Research Laboratory - five), MeAPO-47, MeAPSO-47, SAPO-47 (Silico-Alumino phosphate-forty seven), UiO-21 (University of Oslo-twenty-one), ZK-14 (Zeolite Kerr - fourteen), ZYT-6, Willhendersonit

Zeolith-Typ ERI (Typ-Material: Erionit)

Allg. Formel des Gerüstes (ohne Kationen bzw. Wassermoleküle in den Hohlräumen) : $[X_9Y_{27}O_{72}]$
X = ein oder mehrere Elemente aus der den Gruppen 3-12 (z. B. Co, Zn), der Gruppe 2 (z. B. Mg) oder der Gruppe 13 (z. B. Al) des Periodensystems
Y = ein oder mehrere Elemente der Gruppe 14 (z. B. Si, Ge) oder der der Gruppe 15 (z. B. P) des Periodensystems
Patentierte Materialien: LZ-220 (U. S. Patent 4,503,023, (1985))
Weitere Materialien mit gleichem strukturellen Aufbau: AlPO-17, Linde T

Zeolith-Typ FAU (Typ-Material: Faujasit)

Allg. Formel des Gerüstes (ohne Kationen bzw. Wassermoleküle in den Hohlräumen) : $[X_{58}Y_{134}O_{384}]$
X = ein oder mehrere Elemente aus den Gruppen 3-12 (z. B. Co, Zn), der Gruppe 2 (z. B. Be) oder der Gruppe 13 (z. B. Al) des Periodensystems
Y = ein oder mehrere Elemente der Gruppe 14 (z. B. Si, Ge) oder der Gruppe 15 (z. B. P) des Periodensystems
Patentierte Materialien: CSZ-1 (UK Patent GB 2,076,793, (1981)), ECR-30 (E. Patent 0,351,461, (1989)), LZ-210 (U. S. Patent 4,503,023, (1985)), Zeolite X (Linde X; U. S. Patent 2,882,244, (1959)), Zeolite Y (Linde Y; U. S. Patent 3,130,007, (1964)) Weitere Materialien mit gleichem strukturellen Aufbau: Li-LSX, SAPO-37 (Silico-Alumino phosphatethirty-seven), ZSM-20 (Zeolite Socony Mobil - twenty), ZSM-3 (Zeolite Socony Mobil - three), Zinkophosphat X, Beryllphosphat X

Zeolith-Typ GIS (Typ-Material: Gismondin)

Allg. Formel des Gerüstes (ohne Kationen bzw. Wassermoleküle in den Hohlräumen) : $[X_8Y_8O_{32}]$
X = ein oder mehrere Elemente aus den Gruppen 3-12 (z. B. Co, Zn), der Gruppe 2 (z. B. Be) oder der Gruppe 13 (z.

B. B, Al) des Periodensystems

Y = ein oder mehrere Elemente der Gruppe 14 (z. B. Si, Ge) oder der Gruppe 15 (z. B. P) des Periodensystems

Weitere Materialien und Mineralien (letztere gekennzeichnet durch Unterstreichung) mit gleichem strukturellen Aufbau:

Amicit, Garronit, Gobbinsit, MAPO-43, MAPSO-43 (MgAl(P, Si)O$_4$-43), Na-P1, Na-P2, low-silica Na-P, high-silica Na-P

Zeolith-Typ GME (Typ-Material: Gmelinit)

Allg. Formel des Gerüstes (ohne Kationen bzw. Wassermoleküle in den Hohlräumen) : [X$_8$Y$_{16}$O$_{48}$]

X = ein oder mehrere Elemente aus den Gruppen 3-12 (z. B. Co, Zn), der Gruppe 2 (z. B. Be) oder der Gruppe 13 (z. B. Al) des Periodensystems

Y = ein oder mehrere Elemente der Gruppe 14 (z. B. Si, Ge) oder der Gruppe 15 (z. B. P) des Periodensystems

Zeolith-Typ HEU (Typ-Material: Heulandit)

Allg. Formel des Gerüstes (ohne Kationen bzw. Wassermoleküle in den Hohlräumen) : [X$_8$Y$_{28}$O$_{72}$]

X = ein oder mehrere Elemente aus den Gruppen 3-12 (z. B. Co, Zn), der Gruppe 2 (z. B. Be) oder der Gruppe 13 (z. B. Al) des Periodensystems

Y = ein oder mehrere Elemente der Gruppe 14 (z. B. Si, Ge) oder der Gruppe 15 (z. B. P) des Periodensystems

Patentierte Materialien: LZ-219 (US Patent 4,503,023 (1986)) Weitere Materialien und Mineralien (letztere gekennzeichnet durch Unterstreichung) mit gleichem strukturellen Aufbau: Clinoptilolit

Zeolith-Typ Typ MOR (Typ-Material: Mordenit)

Allg. Formel des Gerüstes (ohne Kationen bzw. Wassermoleküle in den Hohlräumen) : [X$_8$Y$_{40}$O$_{96}$]

X = ein oder mehrere Elemente aus den Gruppen 3-12 (z. B. Co, Zn), der Gruppe 2 (z. B. Be) oder der Gruppe 13 (z. B. Al) des Periodensystems

Y = ein oder mehrere Elemente der Gruppe 14 (z. B. Si, Ge), der Elemente der Gruppe 15 (z. B. P) des Periodensystems

Patentierte Materialien: LZ-211 (U. S. Patent 4,503,023, (1985))

Weitere Materialien und Mineralien (letztere gekennzeichnet durch Unterstreichung) mit gleichem strukturellen Aufbau:

Na-D, RMA-1, Maricopait

Zeolith-Typ NAT (Typ-Material: Natrolith)

Allg. Formel des Gerüstes (ohne Kationen bzw. Wassermoleküle in den Hohlräumen) : [X$_{16}$Y$_{24}$O$_{80}$]

X = ein oder mehrere Elemente aus den Gruppen 3-12 (z. B. Co, Zn), der Gruppe 2 (z. B. Be) oder der Gruppe 13 (z. B. Al) des Periodensystems

Y = ein oder mehrere Elemente der Gruppe 14 (z. B. Si, Ge) oder der Gruppe 15 (z. B. P) des Periodensystems

Weitere Materialien und Mineralien (letztere gekennzeichnet durch Unterstreichung) mit gleichem strukturellen Aufbau:

Gonnardit, Mesolit, Metanatrolith, Paranatrolith, Scolezit, Tetranatrolith

Zeolith-Typ PHI (Typ-Material: Phillipsit)

Allg. Formel des Gerüstes (ohne Kationen bzw. Wassermoleküle in den Hohlräumen) : [X$_6$Y$_{10}$O$_{32}$]

X = ein oder mehrere Elemente aus den Gruppen 3-12 (z. B. Co), der Gruppe 2 (z. B. Be), oder der Gruppe 13 (z. B. Al) des Periodensystems

Y = ein oder mehrere Elemente der Gruppe 14 (z. B. Si) oder der Gruppe 15 (z. B. P) des Periodensystems

Weitere Materialien und Mineralien (letztere gekennzeichnet durch Unterstreichung) mit gleichem strukturellen Aufbau:

Harmotom, DAF-8 (Davy Faraday Research Laboratory - eight), ZK-19 (Zeolite Kerr - nineteen)

Zeolith-Typ SOD (Typ-Material: Sodalith)

Allg. Formel des Gerüstes (ohne Kationen bzw. Wassermoleküle in den Hohlräumen) : [X$_6$Y$_6$O$_{24}$]

X = ein oder mehrere Elemente aus den Gruppen 3-12 (z. B. Co, Zn), der Gruppe 2 (z. B. Be) oder der Gruppe 13 (z. B. Al, Ga) des Periodensystems

Y = ein oder mehrere Elemente der Gruppe 14 (z. B. Si, Ge) oder der Gruppe 15 (z. B. P, As) des Periodensystems

Weitere Materialien und Mineralien (letztere gekennzeichnet durch Unterstreichung) mit gleichem strukturellen Aufbau:

Bicchulit, Helvin, G, Genthelvit, Nosean, Tugtupit, AlPO-20 (Aluminophosphate - twenty), SIZ-9

Für ein Material mit Hopeit-Struktur (ideale chemische Zusammensetzung des Hopeits: Zn$_3$(PO$_4$)$_2$ x n H$_2$O)

sind insbesondere die folgenden Substitutionen bevorzugt:

a) Zn wird ganz oder teilweise (0-100 %) ersetzt durch ein Übergangsmetall (Üm) der Gruppen 3-12 des Periodensystems, vorzugsweise ausgewählt aus der Gruppe aus Zn, Mn, Fe, Co, Ni, Cr, V, Sc, Ti, Cu bis zur Formel $Üm_3(PO_4)_2$ x n $H_2O$;

b) Zn wird ganz oder teilweise (0-100 %) ersetzt durch eine Kombination aus zwei Übergangsmetallen der Gruppen 3-12 des Periodensystems, vorzugsweise ausgewählt aus der Gruppe aus Zn, Mn, Fe, Co, Ni, Cr, V, Sc, Ti, Cu (Üma + Ümb) oder eine Kombination aus einem Übergangsmetall der Gruppen 3-12 des Periodensystems, vorzugsweise ausgewählt aus der Gruppe aus Zn, Mn, Fe, Co, Ni, Cr, V, Sc, Ti, Cu (Üma) + (Ümb) ein Element der Gruppe 13 bis zur Formel $((Üm_a)_x (Üm_b)_{1-x})_3 (PO_4)_2$ x n $H_2O$;

c) Zn wird ganz oder teilweise (0-100 %) durch eine Kombination von 3 Übergangsmetallen der Gruppen 3-12 des Periodensystems, vorzugsweise ausgewählt aus der Gruppe aus Zn, Mn, Fe, Co, Ni, Cr, V, Sc, Ti, Cu (Üma + Ümb + Ümc) oder 2 übergangsmetallen der Gruppen 3-12 des Periodensystems, vorzugsweise ausgewählt aus der Gruppe aus Zn, Mn, Fe, Co, Ni, Cr, V, Sc, Ti, Cu (Üma + Ümb) + (Ümc) einem Element der Gruppe 13 bis zur Formel

$$((Üm_a)_x \ (Üm_b)_y \ (Üm_c)_z) (PO_4)_2 \ x \ n \ H_2O \ mit \ x + y + z = 3;$$

d) Zn wird ganz oder teilweise (0-100 %) durch eine Kombination eines Elements der Gruppe 2 (Be - Ba), (HG-II) und eines Elements aus der Gruppe, welche Übergangsmetalle der Gruppen 3-12 des Periodensystems, vorzugsweise ausgewählt aus der Gruppe aus Zn, Mn, Fe, Co, Ni, Cr, V, Sc, Ti, Cu und einem Element der Gruppe 13 einschließt, (Üm) ersetzt bis zur Formel $((HG-II)_x (Üm)_{1-x})_3 (PO_4)_2$ x n $H_2O$;

e) Zn wird ganz oder teilweise (0-100 %) durch eine Kombination eines Elements der Gruppe 2 (Be - Ba), (HG-II) und zweier Elemente aus den Gruppen 3-12 des Periodensystems, vorzugsweise ausgewählt aus der Gruppe aus Zn, Mn, Fe, Co, Ni, Cr, V, Sc, Ti, Cu und einem Element der Gruppe 13 einschließt, ersetzt bis zur Formel $((HG-II)_x (Üm_a)_y (Üm_b)_z) (PO_4)_2$ x n $H_2O$ mit x + y + z = 3.

Zusätzlich kann in jedem der obigen Fälle noch P aus der $PO_4$-Gruppierung ganz oder teilweise ersetzt werden durch ein oder mehrere Elemente aus der Gruppe 13, vorzugsweise Ga, der Gruppe 14, vorzugsweise Si, Ge, und der Gruppe 15, vorzugsweise As und Sb.

Zusätzlich kann in jedem der obigen Fälle der Wassergehalt n zwischen n = 0-4 liegen unabhängig von der übrigen chemischen Zusammensetzung.

Die erfindungsgemäß verwendbaren kristallinen Materialien können beispielsweise hergestellt werden durch ein Verfahren, welches die folgenden Schritte umfasst: i) Bereitstellung eines natürlichen oder synthetischen Minerals mit der in den Ansprüchen 1-7 angegebenen Struktur und Zusammensetzung von strukturbildenden Anionen und Kationen, ii) vollständige oder partielle Entfernung von vorhandenen austauschbaren Kationen und gegebenenfalls anderen Bestandteilen wie Wasser und Verunreinigungen, iii) Beladen der Kanäle mit einem oder mehreren gewünschten beweglichen Kation(en), insbesondere $Li^+$, $Na^+$, $K^+$ und/oder $Ag^+$.

Die Entfernung von austauschbaren Kationen kann beispielsweise durch eine chemische Behandlung mit bekannten Komplexierungs-mitteln und Chelatbildnern wie EDTA (Ethylendiamintetraessigsäure), Acetylaceton, 1,5-Diphenylthiocarbazon, Kronenether etc. erreicht werden.

Die Beladung der Kanäle mit einem oder mehreren gewünschten beweglichen Kation(en), z.B. Li, Na, K und/oder Ag, kann beispielsweise durch Eintauchen in eine Salzschmelze, z. B. zur Li-Anreicherung mit $LiClO_4$, Suspension in einer Salzlösung oder elektrochemisch erfolgen.

Alternativ können die erfindungsgemäß verwendeten Materialien auch durch direkte chemische Synthese hergestellt werden. Hierzu kann beispielsweise ein hydrothermales Syntheseverfahren analog zu dem in Harrison, W. T. A. et al. in *Chem. Mater.* 1996, 8, 145-151 beschriebenen Verfahren angewandt werden. Typischerweise werden dabei a) austauschbare Kationen als lösliches Salz, z.B. $Li^+$, $Na^+$, $K^+$ und/oder $Ag^+$, b) nichtaustauschbare Übergangsmetallkationen, z. B. in Form eines Oxids, c) $MO_4$-Anionen, z. B. in Form eines löslichen Phosphats wie $(NH_4)_2HPO_4$ oder $(Na,K)_2HPO_4$ oder Silikats wie Kieselsäure $[SiO_x(OH)_{4-2x}]_n$, in den gewünschten Verhältnissen in einem Druckgefäß in Gegenwart von Wasser in einem Temperaturbereich von 20-600 °C umgesetzt.

Nach Beendigung der Synthese liegt das gewünschte Produkt in wässriger Lösung vor und kann durch Entfernung der wässrigen Phase als kristallines Produkt, das die gewünschten Mengen der jeweiligen beweglichen Kationen, $Li^+$, $Na^+$, $K^+$ und/oder $Ag^+$, in den Kanälen enthält, gewonnen werden.

Das erfindungsgemäß verwendete kristalline Material kann als Einzelkristall, bei dem die Kanäle durch den gesamten Einzelkristall hindurchreichen, oder als anisotropes mikrokristallines (500 $\mu$m - 1 $\mu$m) oder nanokristallines (0.999 $\mu$m - 0.001 $\mu$m) Material, in dem die Kanäle bevorzugt in einer Raumrichtung ausgerichtet sind, vorliegen. Die Ausrichtung der Kristallite, welche beispielsweise durch Druck erfolgen kann, erhöht die elektrische Leitfähigkeit des Materials beträchtlich, um bis zu mehrere Zehnerpotenzen (Textureffekt).

In einer Ausführungsform wird das kristalline Material zu einem Pulver vermahlen und kann dann, gegebenenfalls in Gegenwart eines geeigneten Binders wie Polvinylfluorid (PVD), zu einer Tablette oder einer Folie gepresst werden. Bei diesem Pressvorgang geschieht dann die oben erwähnte Ausrichtung der Kanäle.

Das Elektrodenmaterial, welches ein kristallines Material wie oben beschrieben und in einem der Ansprüche 1 bis 6 definiert umfasst oder daraus besteht, wird typischerweise, gegebenenfalls unter Zusatz von elektronisch leitendem Hilfstoff, vorzugsweise Graphit, auf ein elektronisch leitendes Substratmaterial, das aus der Gruppe der Metalle (z. B. Aluminium, Kupfer, Titan), der Legierungen (z. B. Stahl, Bronze) oder der elektronisch leitenden Kunststoffe (z. B. Poly(p-Phenylen-Vinylen) (PPV), Polyanilin (PANI), Polypyrrol (PPy), Polythiophen) ausgewählt ist, aufgebracht und bildet mit diesem eine Elektrode. Alternativ kann die Elektrode auch lediglich aus diesem Elektrodenmaterial bestehen. Diese Elektrode kann eine Anode oder Kathode sein, vorzugsweise handelt es sich um eine Kathode.

Das Elektrodenmaterial kann auf herkömmliche Weise als Pulver oder Folie mit einem Bindemittel auf dem Substratmaterial aufgebracht werden. Besonders bevorzugt erfolgt jedoch die Aufbringung auf das Substratmaterial durch direkte Beschichtung nach grundsätzlich bekannten Verfahren (Chung, S.-Y. et al. in Nature Mat. 2002, 1, 123-128). Beispielsweise wird Hopeit seit langem großtechnisch als Phosphat-Korrosionschutzschicht für Stähle und andere Eisenwerkstoffe eingesetzt. Für diesen Zweck wird in der Regel eine Schichtdicke von ca. 20 $\mu$m eingesetzt, jedoch sind in der Patentliteratur auch Prozesse beschrieben, mit denen Schichten von mehreren Millimetern erzeugt werden können (DE 2030105 A1). Für die Verwendung als Elektrodenmaterial ist eine Schichtdicke von etwa 0,02 bis 0,1 mm bevorzugt.

Die sehr gute Haftung der Hopeit-Phosphatschichten erlaubt einen extrem kleinen Biegeradius der beschichteten Bleche und ermöglicht die Konstruktion von prismatischen Batterien (nicht Teil der beanspruchten Erfindung), welche mit den herkömmlichen phosphat-basierten Elektrodenmaterialien aufgrund der schlechteren Haftungseigenschaften nicht möglich war.

Die direkte Beschichtung hat den Vorteil einer besonders einfachen und äußerst kostengünstigen Herstellung und bietet darüber hinaus den zusätzlichen Vorteil, dass durch die Abwesenheit von Binde- oder Füllmitteln ein entsprechender Kapazitätsverlust des Elektrodenmaterials vermieden wird.

In einem weiteren Aspekt betrifft die vorliegende Offenbarung eine elektrochemische Speichervorrichtung, welche das oben beschriebene kristalline Material nach einem der Ansprüche 1-6 bzw. die oben beschriebene Elektrode, insbesondere Kathode, umfasst.

Diese elektrochemische Speichervorrichtung ist typischerweise eine Batterie (nicht Teil der beanspruchten Erfindung), falls das Elektrodenmaterial oxidierbare bzw. reduzierbare Zentren (Metallkationen wie Zn, Mn, Fe, Cr, Ti) aufweist, insbesondere eine wiederaufladbare Sekundärbatterie. In einer bevorzugten Ausführungsform handelt es sich dabei um eine prismatische Batterie.

Vorzugsweise ist die Batterie eine Li-, Na-, K-, oder Ag-Ionen-Batterie, besonders bevorzugt eine Lithiumionen- Batterie, und das erfindungsgemäß als Elektrodenmaterial verwendete kristalline Material enthält dann ausschließlich oder vorwiegend den jeweiligen Kationentyp als bewegliche und leitende Kationen.

Grundsätzlich könnten alle im Stand der Technik bekannten Typen und Aufbauten für solche Batterien, insbesondere Sekundärbatterien, mit wässrigen und nicht-wässrigen Elektrolyten und, je nach Typ, mit oder ohne Separator, verwendet werden. Besonders bevorzugt werden die offenbarungsgemäss verwendeten Materialien jedoch in nicht-wässrigen Systemen (mit aprotischen Elektrolyten) eingesetzt. Mit diesen nicht-wässrigen Batteriesystemen können Spannungen von über 1,6 V bis zu 3,5 V und mehr erzielt werden. Eine spezielle, nicht beschränkende Ausführungsform ist im folgenden Beispiel 2 beschrieben.

Ein besonderer Vorteil der mit den offenbarungsgemäss verwendeten Materialien hergestellten Batterien, insbesondere Lithiumionen-Batterien besteht darin, dass sie zu einer Tiefentladung bis zu mindestens 0,05 V, vorzugsweise 0,02 V bis hin zur Kurzschlussfestigkeit, in der Lage sind (nicht Teil der beanspruchten Erfindung) . Eine derartige Tiefentladung, die auf den besonderen strukturellen Eigen-schaften, vor allem dem rigiden Gerüst der Wirtsstruktur, der verwendeten Materialien beruht, war mit den herkömmlichen Elektrodenmaterialien nicht erreichbar.

Ein verwandter Aspekt der Offenbarung betrifft die Verwendung eines kristallinen Materials wie in einem der Ansprüche 1-6 definiert, bei dem mehr als 50 % der M-Atome P sind, insbesondere mit Hopeit-Struktur, als elektroaktives Material allgemein, spezieller als elektroaktives Separatormaterial (z. B. für Batterien) oder semi-permeable Membran (nicht Teil der beanspruchten Erfindung).

Ein Aspekt der Erfindung ist ein Kondensator, insbesondere ein Doppelschicht-Kondensator, der über eine Polarisation der Elektroden die elektrische Energie speichert.

Der Aufbau dieser elektrischen Speicherzelle erfolgt analog zur Lithiumionen-Batterie, wobei in diesem Fall Anode und Kathode durch zwei gleiche Elektroden ersetzt werden. Der Aufbau der Zelle enthält somit die Komponenten Elektrode - Separator - Elektrode sowie einen aprotischen Elektrolyten.

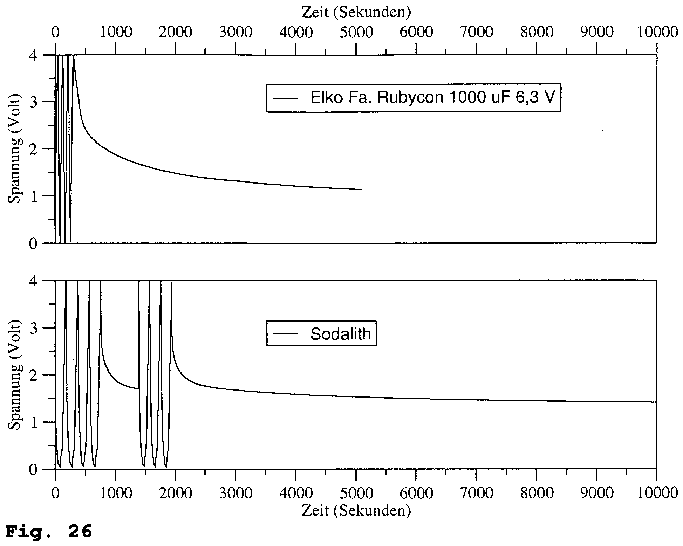

Dieser Doppelschicht-Kondensator mit Elektroden, die aus Materialien mit Hopeit- bzw. Zeolith-Struktur bestehen, kann im Gegensatz zu den kommerziell erhältlichen Doppelschicht- Kondensatoren mit Elektroden aus porösem Graphit auf Spannungen über 5 V aufgeladen werden. Die Entladekurve dieses Kondensators fällt dann typischerweise schnell ab, bis eine materialspezifische Spannung erreicht wird, ab der dann die Entladung wie bei einer Batterie sehr langsam erfolgt. Ein erfindungsgemäßer Kondensatoraufbau mit einer Sodalith-Elektrode wurde in Beispiel 10 getestet und die Ergebnisse sind in Fig. 26 dargestellt.

Zur Realisierung der Erfindung ist ein erfindungsgemäßes Elektrodenmaterial bevorzugt, das unter den Betriebsbedingungen des Kondensators keine oder nur eine geringe Zahl an oxidierbaren oder reduzierbaren Zentren aufweist.

Die gewünschte Anzahl der Redoxzentren kann durch Auswahl oder Modifikation eines bestimmten Elektrodenmaterials bzw. Strukturtyps weitgehend vorgegeben werden. Ein rein silikatischer Zeolith, d.h. alle strukturbildenden Ionen M = Si, weist praktisch keine Redoxzentren auf und eignet sich damit gut für den Einsatz als Elektrodenmaterial in Kondensatoren, aber kaum für Batterien. Durch den sukzessiven Ersatz von Si durch andere Ionen, wie z.B. Al oder P (oder Ersatz durch andere Ionen wie hier schon an anderer Stelle bei der Definition des erfindungsgemäß verwendeten Elektrodenmaterials näher ausgeführt), entstehen Redoxzentren, welche die Eignung für Batterien gewährleisten bzw. erhöhen und die Eignung für Kondensatoren verringern. Viele der erfindungsgemäßen Elektrodenmaterialien eignen sich sowohl für Batterien als auch, insbesondere bei höheren Stromstärken (beispielsweise beträgt der maximale Ladestrom das 10-fache der Nennkapazität des Kondensators oder mehr), für den Einsatz in Kondensatoren. In Kenntnis der vorliegenden Offenbarung kann die Eignung des jeweiligen erfindungsgemäßen Elektrodenmaterials für Batterien und/oder Kondensatoren, insbesondere Lithium-Batterien und/oder Lithium-Kondensatoren, unschwer durch Routineversuche bestimmt werden.

## Kurzbeschreibung der Figuren

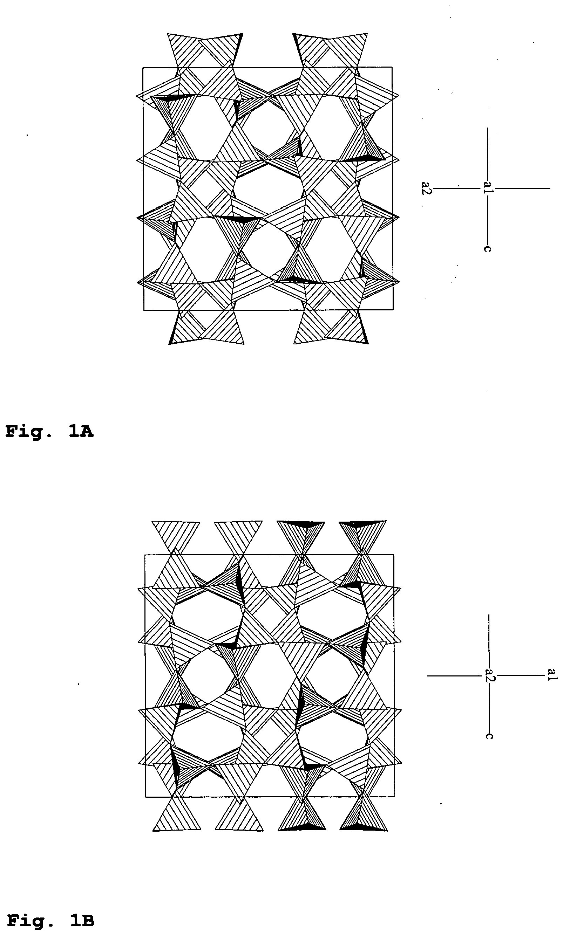

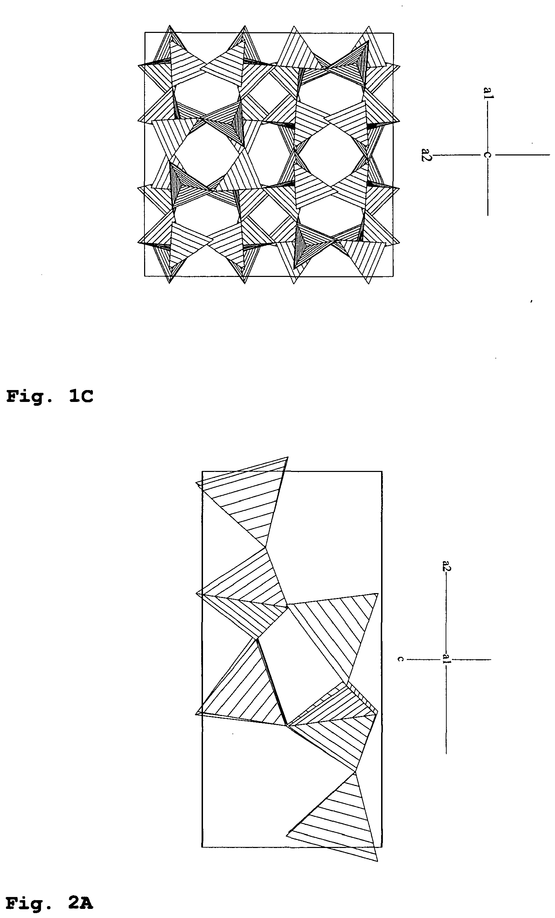

Fig. 1 zeigt verschiedene Darstellungen der Einheitszelle eines erfindungsgemäß verwendbaren Kristalls mit Analcim-Struktur: 1A entlang der al-Achse; 1B entlang der a2-Achse; 1C entlang der c-Achse.

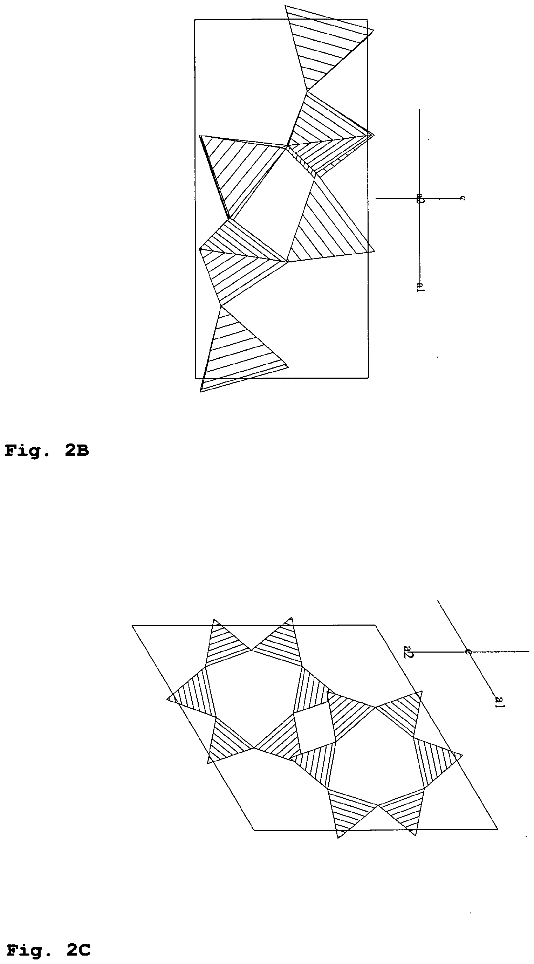

Fig. 2 zeigt verschiedene Darstellungen der Einheitszelle eines erfindungsgemäß verwendbaren Kristalls mit Cancrinit-Struktur: 2A entlang der al-Achse; 2B entlang der a2-Achse; 2C entlang dr c-Achse.

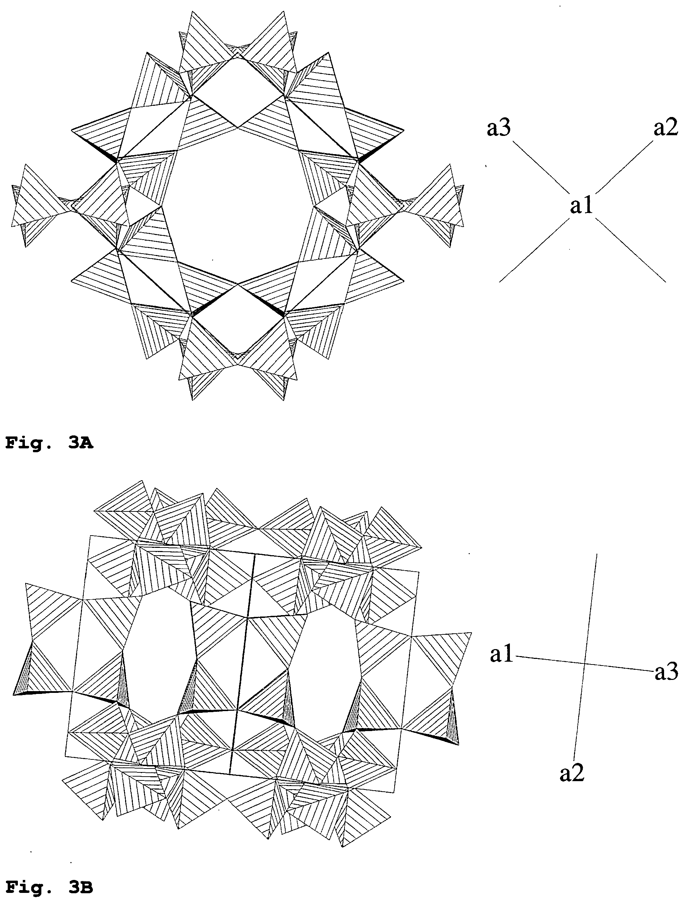

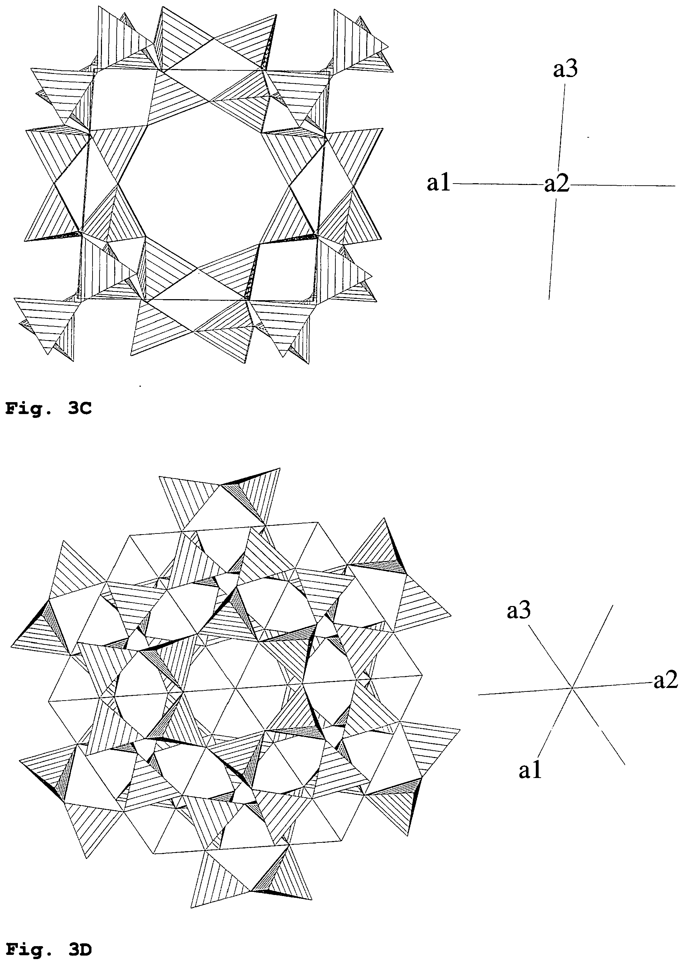

Fig. 3 zeigt verschiedene Darstellungen der Einheitszelle eines erfindungsgemäß verwendbaren Kristalls mit Chabasit-Struktur: 3A entlang der al-Achse; 3B entlang der a1-a3-Achse; 3C entlang der a2-Achse; 3D entlang der Raumdiagonale.

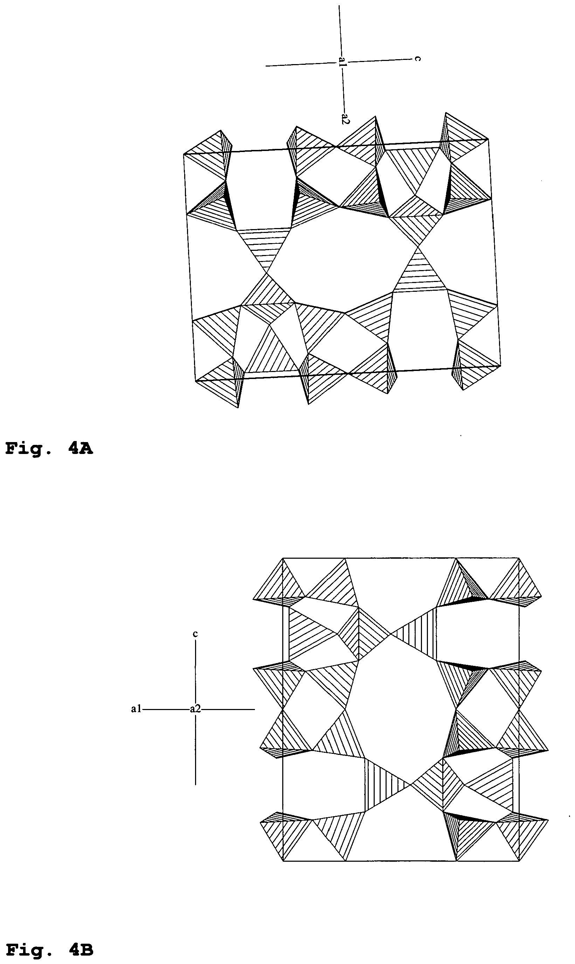

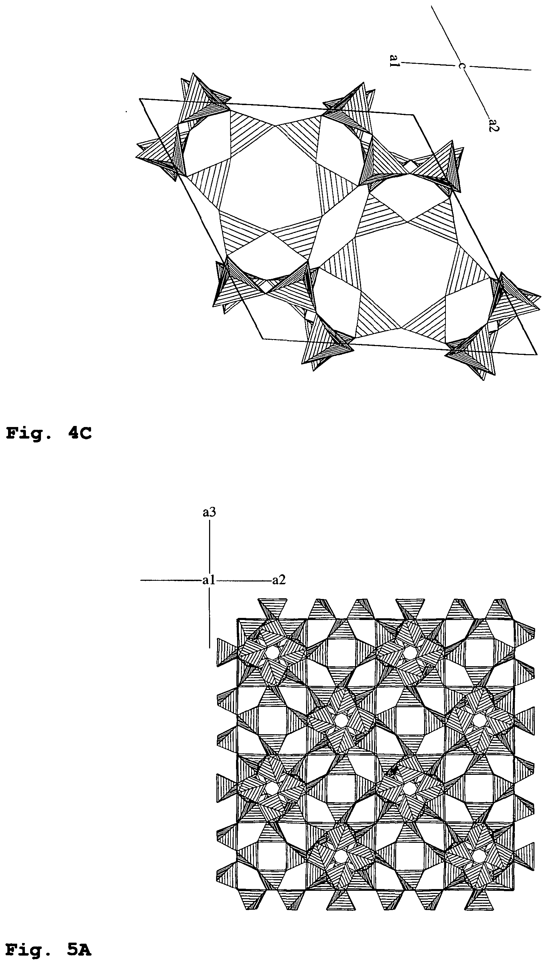

Fig. 4 zeigt verschiedene Darstellungen der Einheitszelle eines erfindungsgemäß verwendbaren Kristalls mit Erionit-Struktur: 4A entlang der al-Achse; 4B entlang der a2-Achse; 4C entlang der c-Achse.

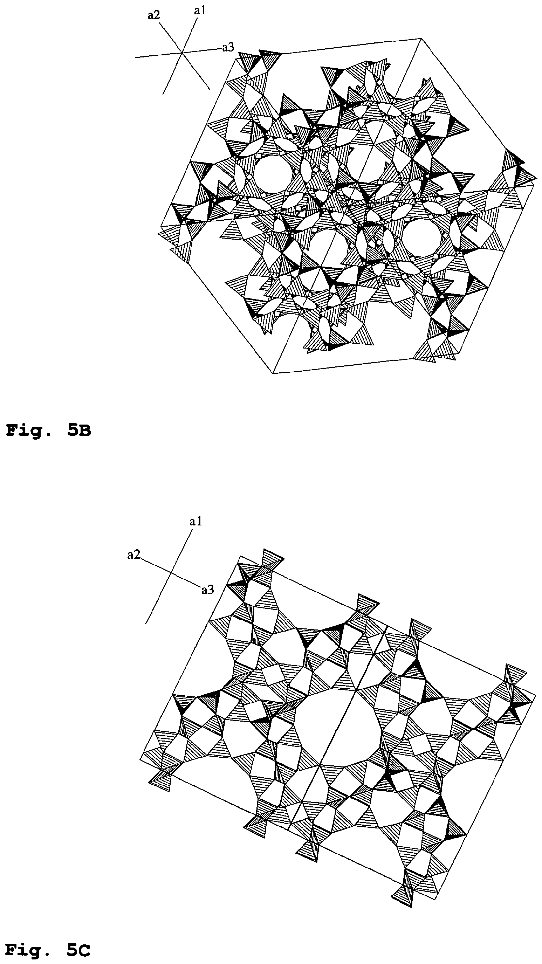

Fig. 5 zeigt verschiedene Darstellungen der Einheitszelle eines erfindungsgemäß verwendbaren Kristalls mit Faujasit-Struktur: 5A entlang der al-Achse; 5B entlang der Raumdiagonale; 5C entlang der Würfelkante.

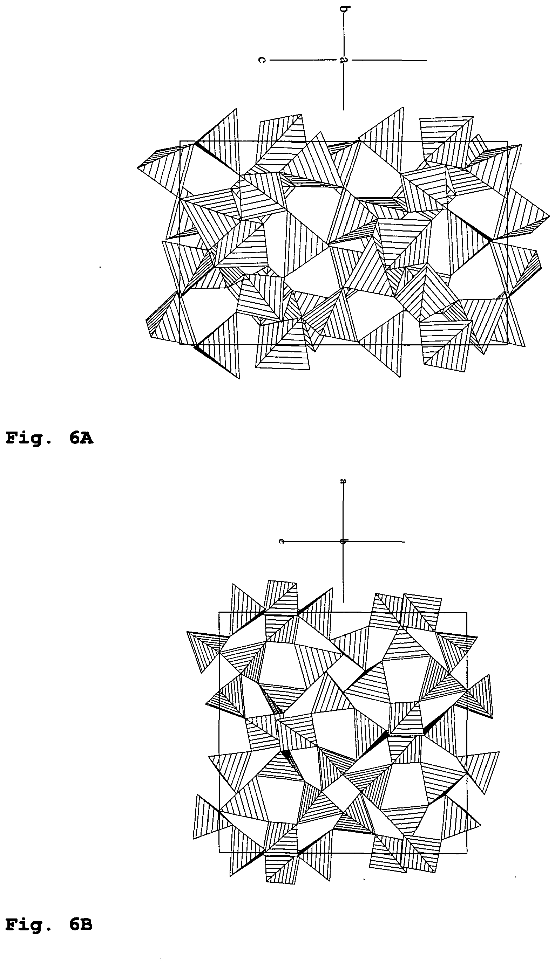

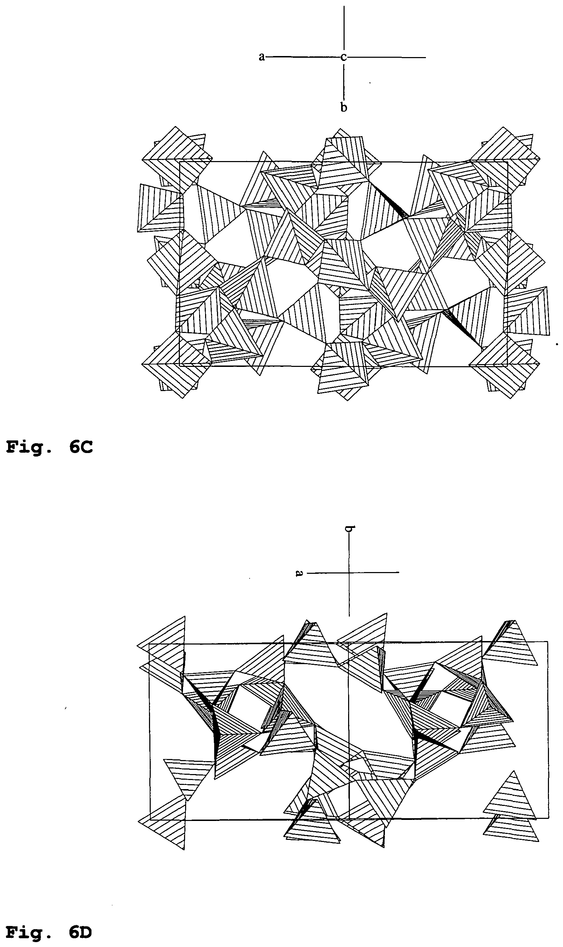

Fig. 6 zeigt verschiedene Darstellungen der Einheitszelle eines erfindungsgemäß verwendbaren Kristalls mit Gismondin-Struktur: 6A entlang der a-Achse; 6B entlang der b-Achse; 6C entlang der c-Achse; 6D entlang der Kante.

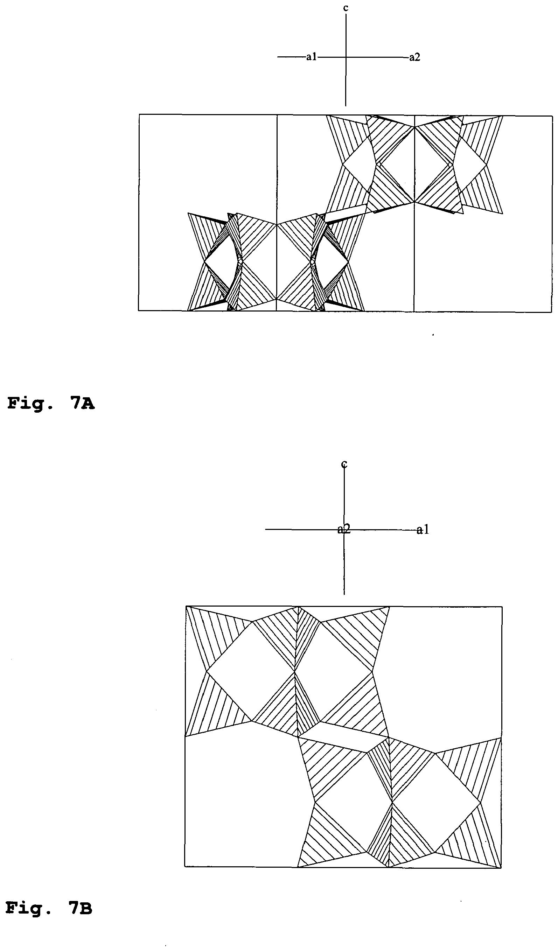

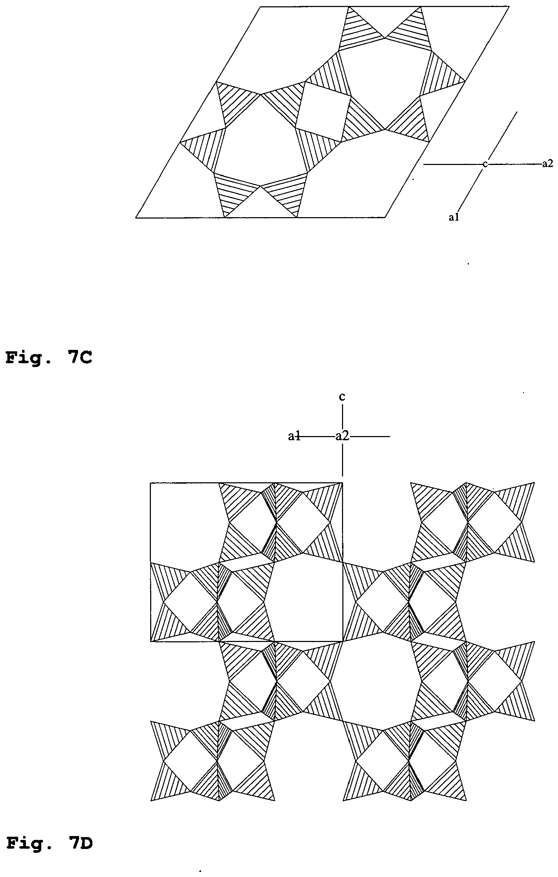

Fig. 7 zeigt verschiedene Darstellungen der Einheitszelle eines erfindungsgemäß verwendbaren Kristalls mit Gmelinit-Struktur: 7A entlang der a1-a2-Achse; 7B entlang der a2-Achse; 7C entlang der c-Achse; 7D mehrere Elementarzellen entlang der a2-Achse.

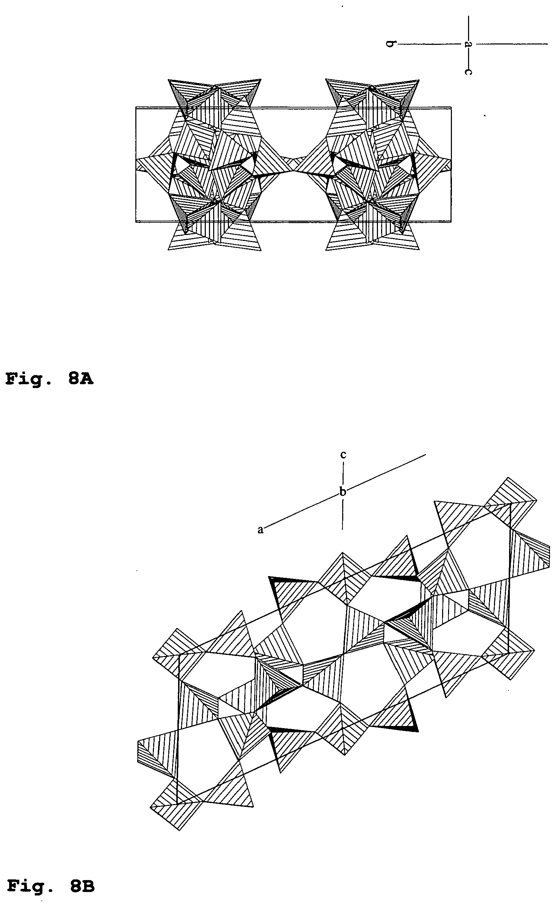

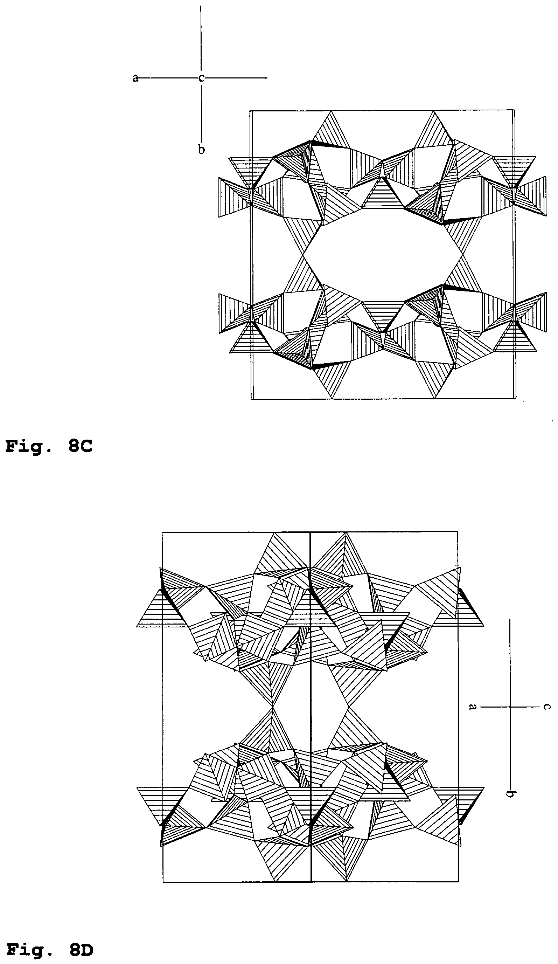

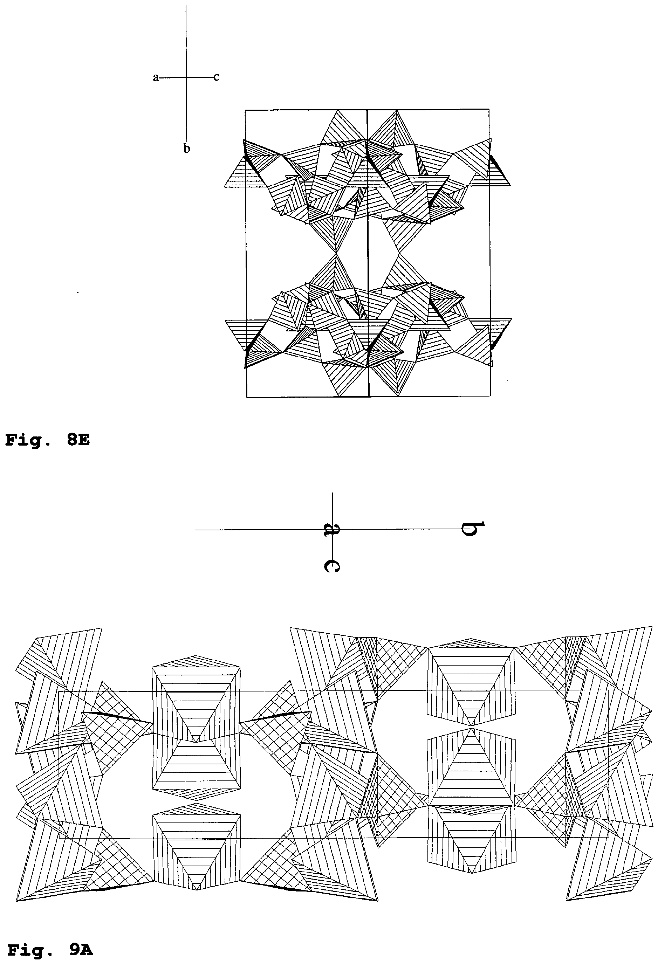

Fig. 8 zeigt verschiedene Darstellungen der Einheitszelle eines erfindungsgemäß verwendbaren Kristalls mit Heulandit-Struktur: 8A entlang der a-Achse; 8B entlang der b-Achse; 8C entlang der c-Achse; 8D entlang einer Kante; 8E entlang einer zweiten Kante.

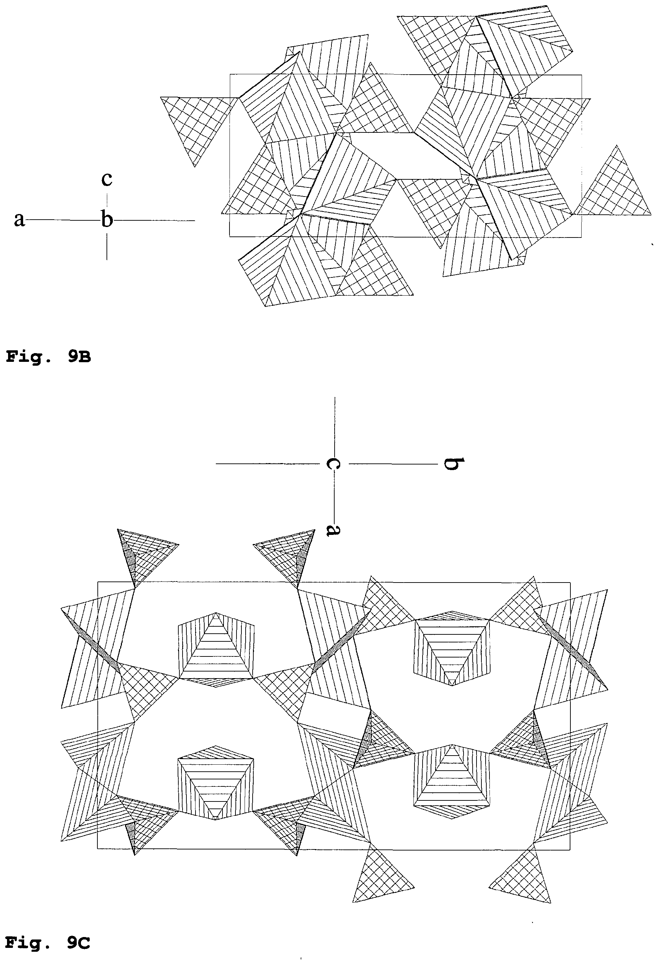

Fig. 9 zeigt verschiedene Darstellungen der Einheitszelle eines erfindungsgemäß verwendbaren Kristalls mit Hopeit-Struktur: 9A entlang der a-Achse; 9B entlang der b-Achse; 9C entlang der c-Achse. Die $MO_4$-Koordinationspolyeder sind karriert, die Koordinationspolyeder der strukturbildenden Elemente sind liniert dargestellt.

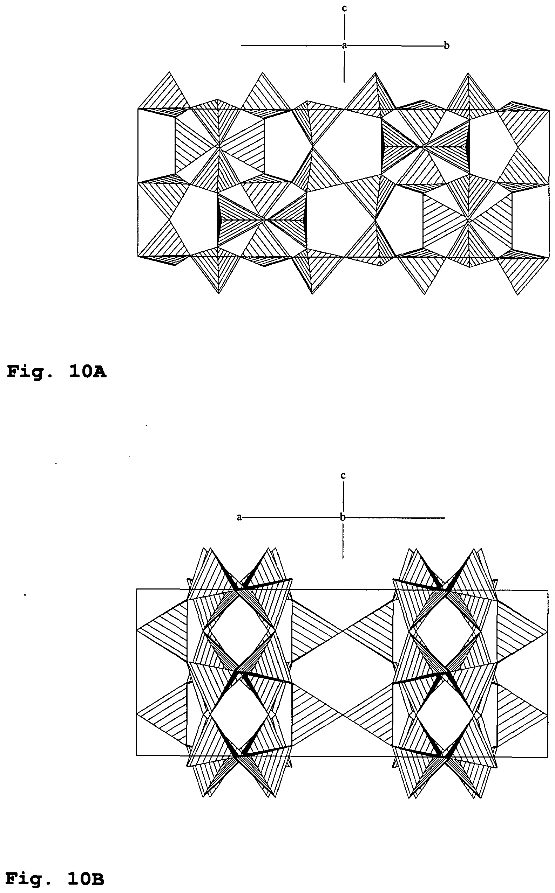

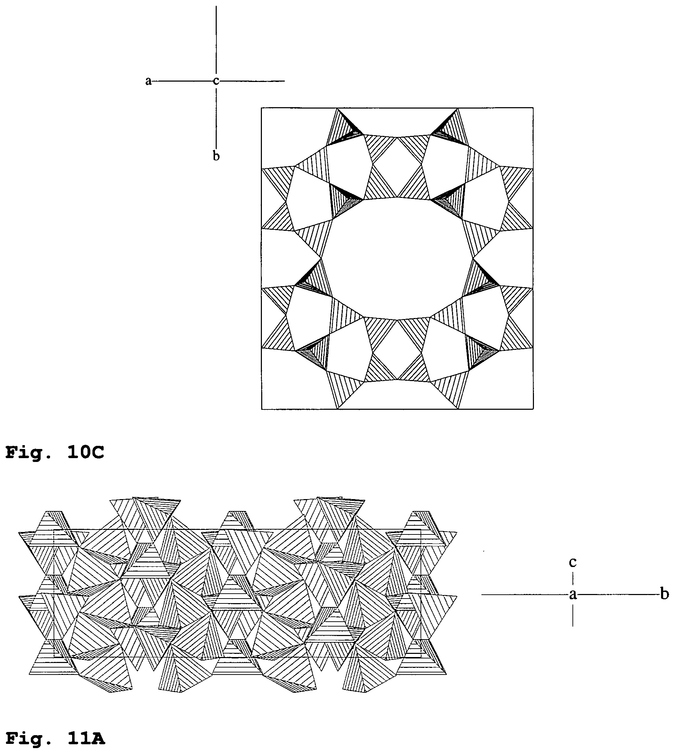

Fig. 10 zeigt verschiedene Darstellungen der Einheitszelle eines erfindungsgemäß verwendbaren Kristalls mit Mordenit-Struktur: 10A entlang der a-Achse; 10B entlang der b-Achse; 10C entlang der c-Achse.

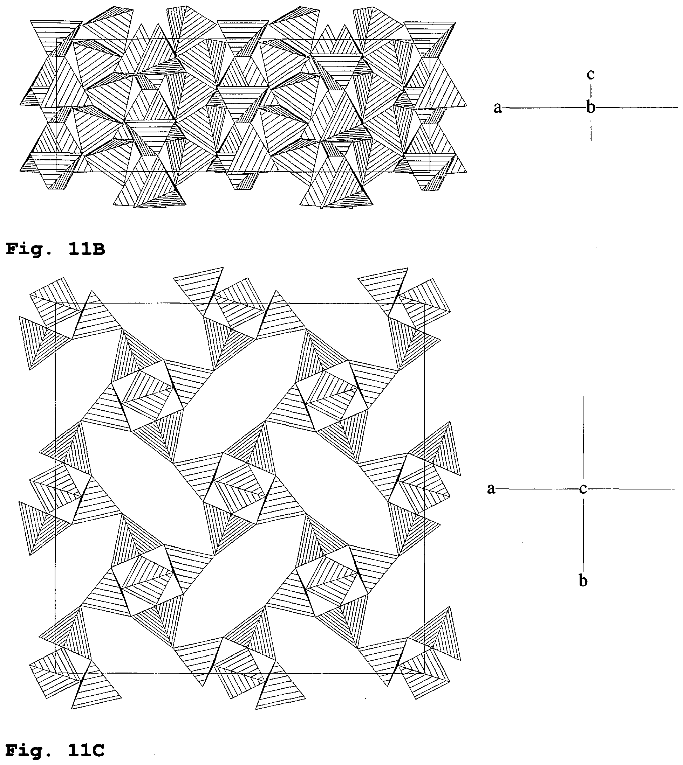

Fig. 11 zeigt verschiedene Darstellungen der Einheitszelle eines erfindungsgemäß verwendbaren Kristalls mit Natrolith-Struktur: 11A entlang der a-Achse; 11B entlang der b-Achse; 11C entlang der c-Achse.

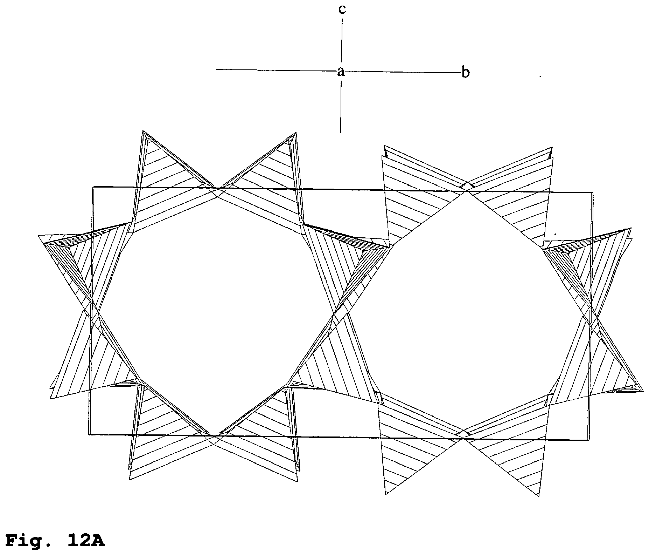

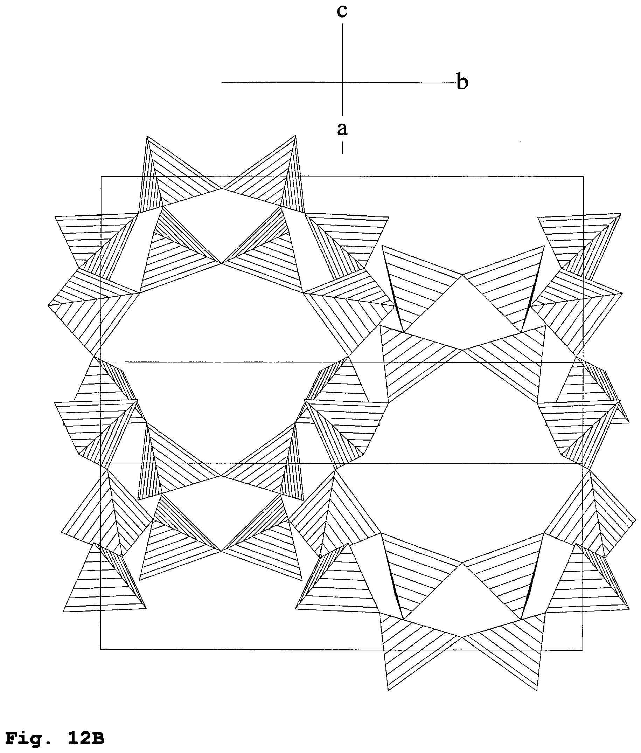

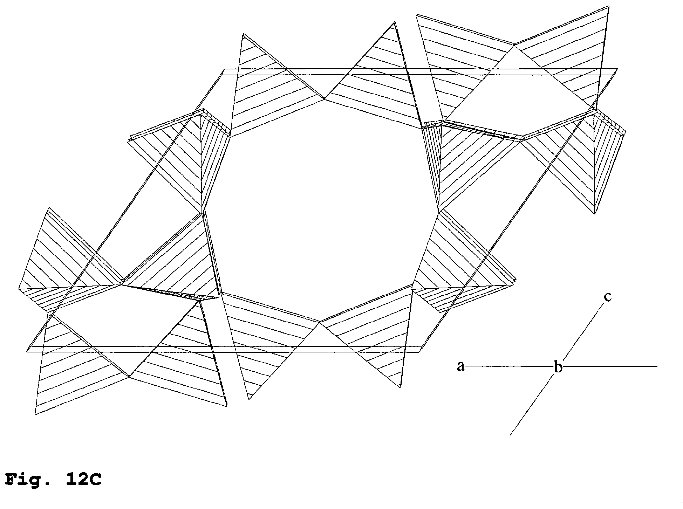

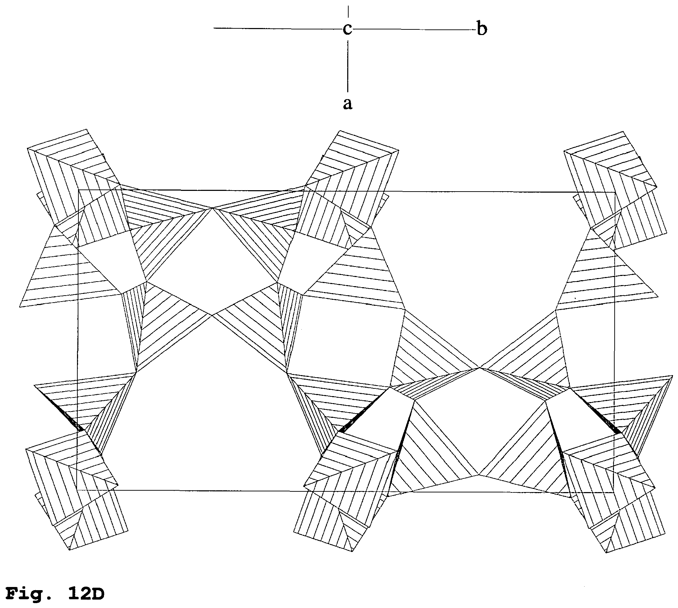

Fig. 12 zeigt verschiedene Darstellungen der Einheitszelle eines erfindungsgemäß verwendbaren Kristalls mit Phillipsit-Struktur: 12A entlang der a-Achse; 12B entlang der a-c-Achse; 12C entlang der b-Achse; 12D entlang der c-Achse.

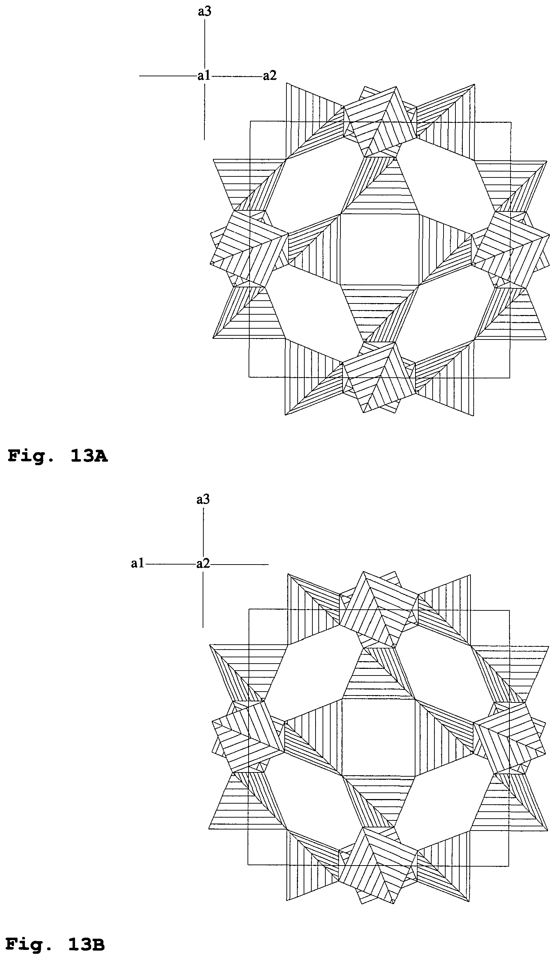

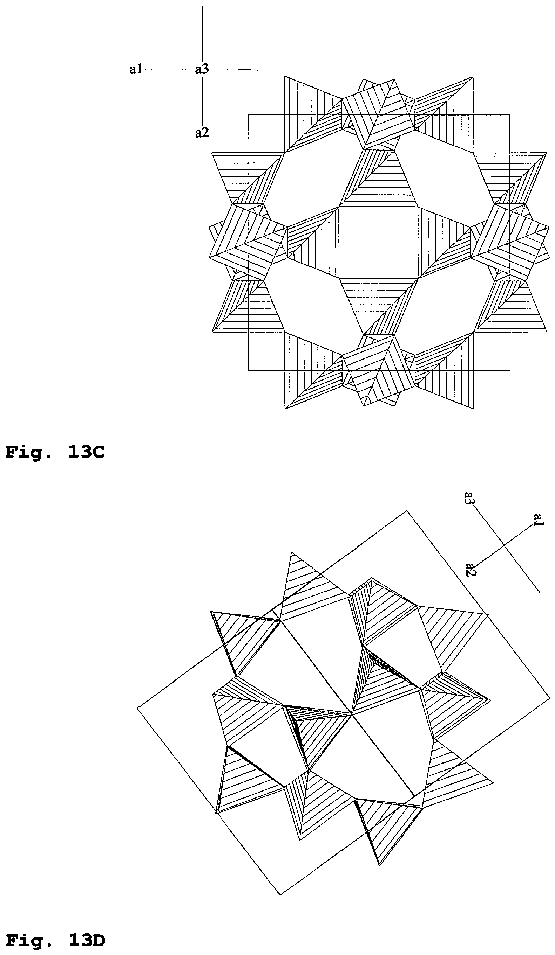

Fig. 13 zeigt verschiedene Darstellungen der Einheitszelle eines erfindungsgemäß verwendbaren Kristalls mit Sodalith-Struktur: 13A entlang der al-Achse; 13B entlang der a2-Achse; 13C entlang der a3-Achse; 13D entlang einer Kante; 13E entlang der Raumdiagonale.

Fig. 14 zeigt den Verlauf der Entladezeit, die über die Anzahl der Entlade- und Ladezyklen aufgetragen ist, einer Lithiumionen-Batterie mit Analcim-Kathode.

Fig. 15 zeigt den Verlauf der Entladezeit, die über die Anzahl der Entlade- und Ladezyklen aufgetragen ist, einer Lithiumionen-Batterie mit Chabasit-Kathode.

Fig. 16 zeigt den Verlauf der Entladezeit, die über die Anzahl der Entlade- und Ladezyklen aufgetragen ist, einer Lithiumionen-Batterie mit Mordenit-Kathode.

Fig. 17 zeigt den Verlauf der Entladezeit, die über die Anzahl der Entlade- und Ladezyklen aufgetragen ist, einer Lithiumionen-Batterie mit Natrolith-Kathode.

Fig. 18 zeigt den Verlauf der Entladezeit, die über die Anzahl der Entlade- und Ladezyklen aufgetragen ist, einer Lithiumionen-Batterie mit Sodalith-Kathode.

Fig. 19 zeigt den Verlauf der Entladezeit, die über die Anzahl der Entlade- und Ladezyklen aufgetragen ist, einer Lithiumionen-Batterie mit Hopeit-Kathode auf Kupferfolie.

Fig. 20 zeigt den Verlauf der Entladezeit, die über die Anzahl der Entlade- und Ladezyklen aufgetragen ist, einer Lithiumionen-Batterie mit Hopeit-Kathode auf einem phosphatierten Stahlblech.

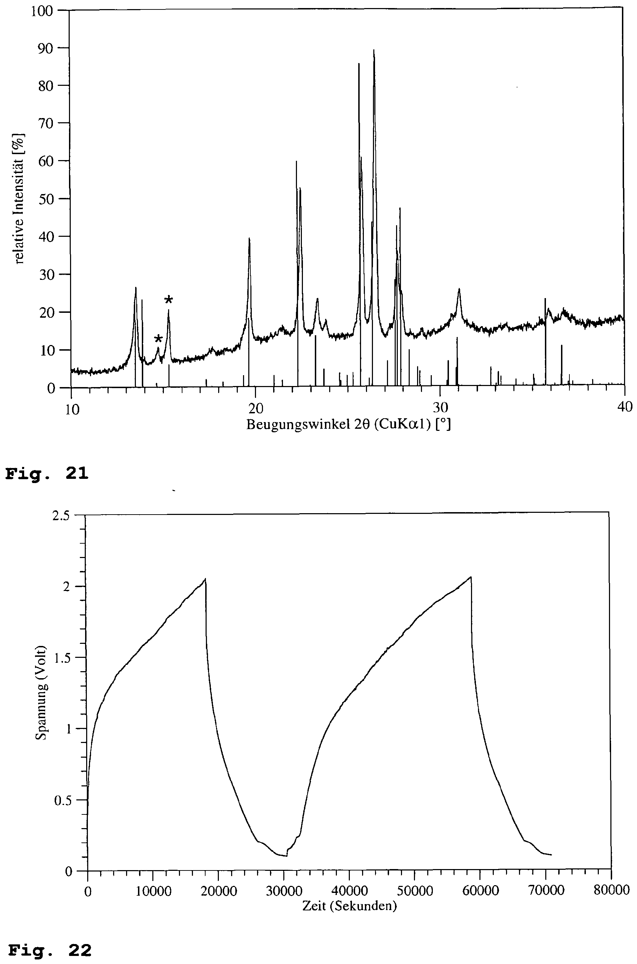

Fig. 21 zeigt das gemessene Pulverdiffraktogramm eines Mordenits auf Zn-Phosphatbasis mit ausgeprägtem Textureffekt (siehe beispielsweise die mit einem Stern bezeichneten Reflexe). Die senkrecht eingezeichneten Linien bezeichnen die Lage der Bragg-Reflexe eines Standard-Mordenits mit einer Grüstzusammensetzung von $[(Al, Si)_{48}O_{96}]$ (ohne Kationen bzw. Wassermoleküle in den Hohlräumen).

Fig. 22 zeigt die Lade- und Entladekurven von zwei aufeinanderfolgender Zyklen (bestehend aus Ladung und Entladung der Batterie) einer Lithiumionen-Batterie mit Heulandit-Kathode im Spannungsbereich 0,05-2,05 V.

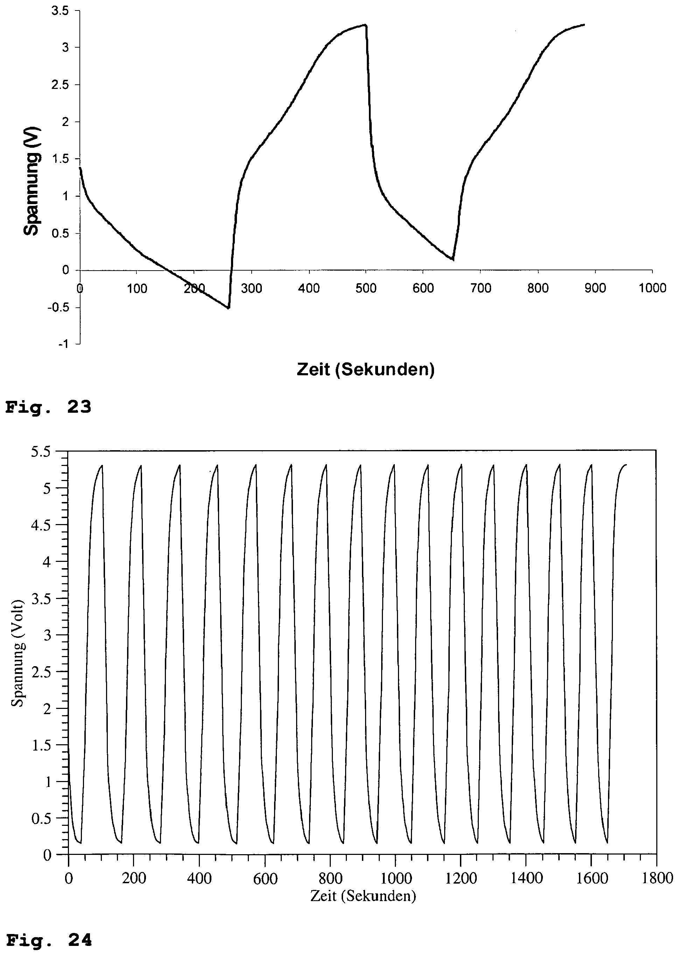

Fig. 23 zeigt die Entlade- und Ladekurve zweier aufeinanderfolgender Zyklen (bestehend aus Entladung und Ladung der Batterie) einer Lithiumionen-Batterie mit Hopeit-Kathode auf Kupferfolie bei Tiefentladung auf U = - 0,5 V im ersten Zyklus.

Fig. 24 zeigt die Entlade- und Ladekurven von 16 aufeinanderfolgender Zyklen (bestehend aus Entladung und Ladung der Batterie) einer Lithiumionen-Batterie mit Analcim-Kathode im Spannungsbereich 0,14-5,31 V.

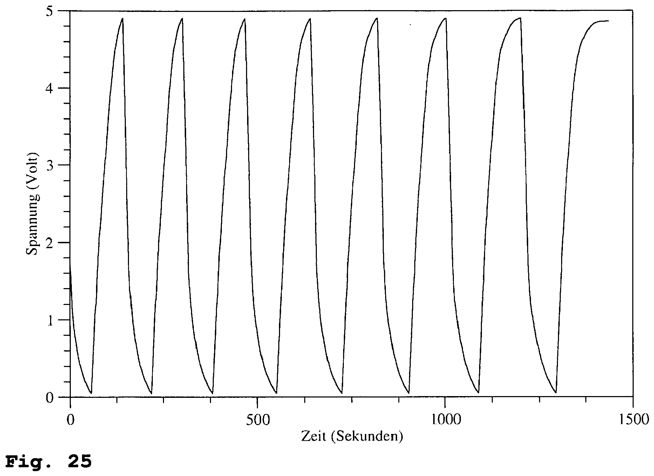

Fig. 25 zeigt die Entlade- und Ladekurven von 8 aufeinanderfolgender Zyklen (bestehend aus Entladung und Ladung der Batterie) einer Lithiumionen-Batterie mit Chabasit-Kathode im Spannungsbereich 0,14-4,9 V.

Fig. 26 zeigt die vier Zyklen (bestehend aus Entladung und Ladung) im Spannungsbereich zwischen 0,05-4,05 V und einer Stromstärke von 1 mA bei einer erfindungsgemäßen elektrischen Speichereinheit mit einer Elektrode aus Sodalith die wenige Redox-Zentren enthält, sich auf über 4 V aufladen lässt und beim Entladen zuerst wie ein Kondensator schnell Energie verliert, dann aber auf ein konstantes Spannungsniveau wie bei den bekannten Lithiumionen-Batterien übergeht. Nach dem vierten Aufladen startete die Messung des Spannungsabfalls. Zum Vergleich ist ein kommerziell erhältlicher Elektrolytkondensator (Elko) der Fa. Rubycon 1000 µF 6,3 V ebenfalls vier Zyklen (bestehend aus Entladung und Ladung des Kondensators) im Spannungsbereich zwischen 0,05-4,05 V und einer Stromstärke von 1 mA zykliert worden. Nach dem vierten Aufladen startete die Messung des Spannungsabfalls. Die gemessene Spannung 5092 s nach dem Aufladen beträgt beim Elko der Fa. Rubycon U = 1,14 V und bei der erfindungsgemäßen elektrischen Speichereinheit mit einer Elektrode aus Sodalith U = 1,41 V.

Die nachfolgenden, nicht-beschränkenden Beispiele sollen die vorliegende Offenbarung näher erläutern.

**Beispiel 1**

Ein mikrokristallines Material mit Hopeit-Struktur und Lithiumionen als bewegliche Kationen wurde nach dem von Harrison, W. T. A. et al. in Chem. Mater. 1996, 8, 145-151, beschriebenen hydrothermalen Syntheseverfahren hergestellt und hatte folgende Zusammensetzung $Zn_3(PO4)_2$ x 4 $H_2O$.

**Beispiel 2**

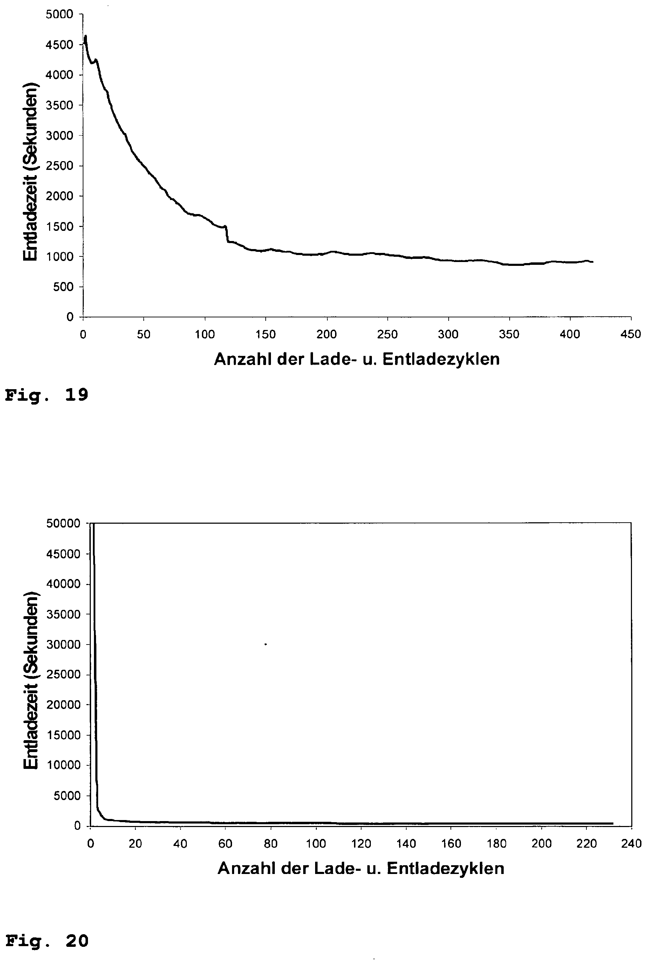

Ein synthetischer Hopeit, $Zn_3(PO_4)_2$ x 4 $H_2O$, wurde mit Li-Ionen beladen elektrochemisch und als Kathode in einer Lithiumionen-Sekundärbatterie (nicht erfindungsgemäss) verwendet (Chung, S.-Y. et al. in Nature Mat. 2002, 1, 123-128). Es wurde eine Spannung von 3,61 V gegenüber einer Li-Blech-Anode aufgebaut. Fig. 19 zeigt den stabilen Verlauf der Entladezeit, die über die Anzahl der Entlade- und Ladezyklen aufgetragen ist, dieser Batterie über mehrere hundert Zyklen und demonstriert, dass eine Tiefentladung im Bereich von 0,05 V - 3,61 V erreicht wurde.

**Beispiel 3**

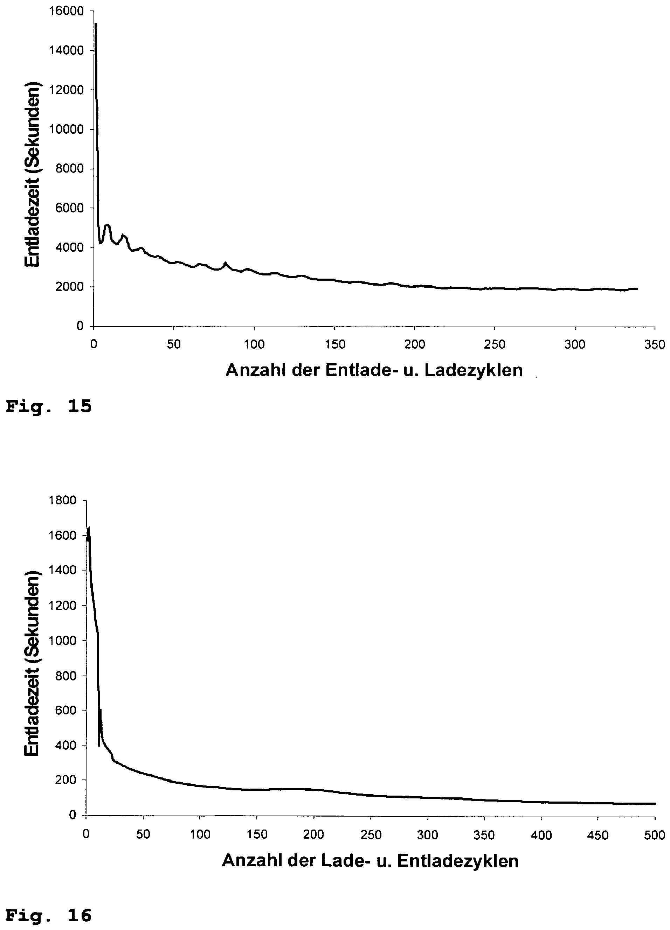

Ein klassischer Si-Zeolith (kommerzieller Mordenit HS690, Wako Chemicals GmbH, Neuss) mit der folgenden chemischen Zusammensetzung $[(Al,Si)_{48}O_{96}]$ (ohne Berücksichtigung der Kationen bzw. Wassermoleküle in den Hohlräumen) wurde wie Beispiel 2 mit Li beladen und als Kathode mit dem selben Aufbau wie in Beispiel 2 (nicht erfindungsgemäss) verwendet. Es wurde eine Spannung von 1,61 V gegenüber einer Li-Blech-Anode aufgebaut Fig. 16 zeigt den stabilen Verlauf der Entladezeit, die über die Anzahl der Entlade- und Ladezyklen aufgetragen ist, dieser Batterie über mehrere hundert Zyklen und demonstriert, dass eine Tiefentladung im Bereich von 0,05 V - 1,61 V erreicht wurde.

### Beispiel 4

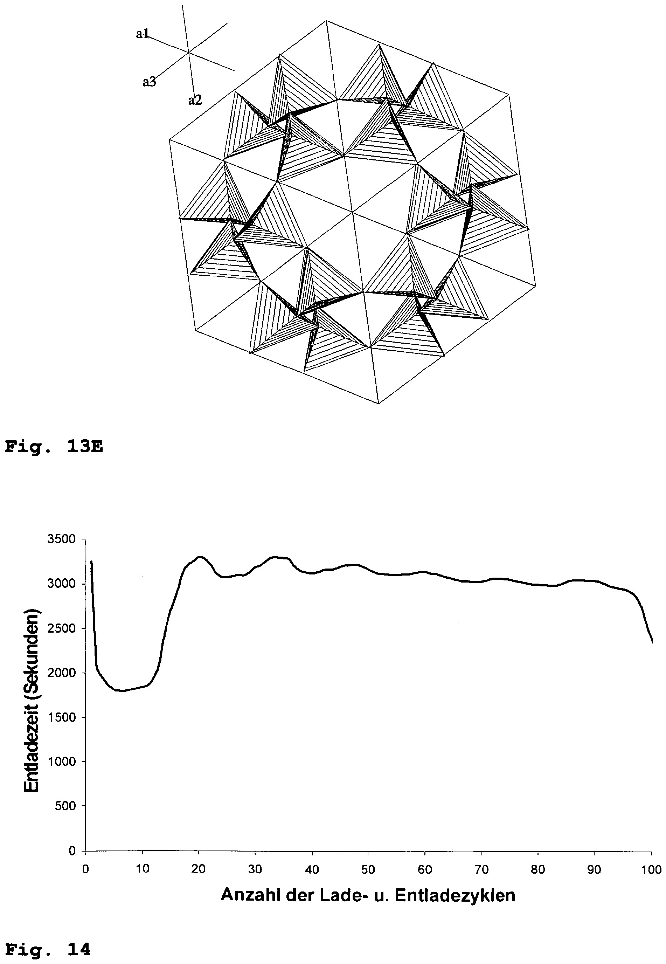

Ein Zeolith mit Analcim-Struktur wurde wie in Beispiel 2 mit Li beladen und als Kathode in einer Lithiumionen-Batterie mit dem selben Aufbau wie in Beispiel 2 (nicht erfindungsgemäss) verwendet. Fig. 14 zeigt den stabilen Verlauf der Entladezeit, die über die Anzahl der Entlade- und Ladezyklen aufgetragen ist, dieser Batterie über mehr als hundert Zyklen und demonstriert, dass eine Tiefentladung im Bereich von 0,05 V - 3,61 V erreicht wurde.

### Beispiel 5

Ein Zeolith mit Chabasit-Struktur wurde wie in Beispiel 2 mit Li beladen und als Kathode in einer Lithiumionen-Batterie mit dem selben Aufbau wie in Beispiel 2 (nicht erfindungsgemäss) verwendet. Fig. 15 zeigt den stabilen Verlauf der Entladezeit, die über die Anzahl der Entlade- und Ladezyklen aufgetragen ist, dieser Batterie über mehrere hundert Zyklen und demonstriert, dass eine Tiefentladung im Bereich von 0,05 V - 3,61 V erreicht wurde.

### Beispiel 6

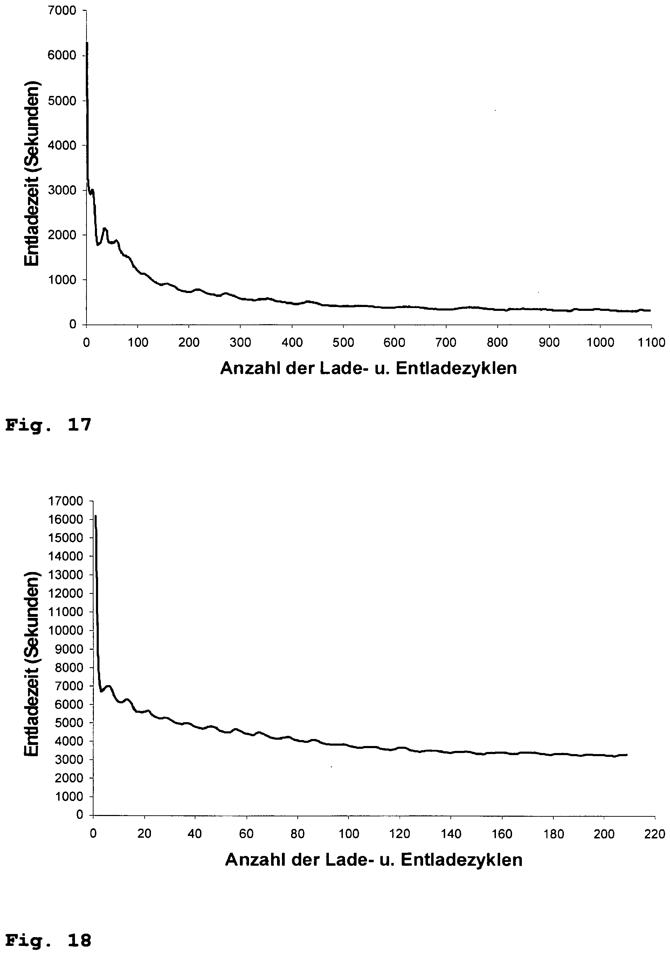

Ein Zeolith mit Natrolith-Struktur wurde wie in Beispiel 2 mit Li beladen und als Kathode in einer Lithiumionen-Batterie mit dem selben Aufbau wie in Beispiel 2 (nicht erfindungsgemäss) verwendet. Fig. 17 zeigt den stabilen Verlauf der Entladezeit, die über die Anzahl der Entlade- und Ladezyklen aufgetragen ist, dieser Batterie über mehrere hundert Zyklen und demonstriert, dass eine Tiefentladung im Bereich von 0,05 V - 3,61 V erreicht wurde.

### Beispiel 7

Ein Zeolith mit Sodalith-Struktur wurde wie in Beispiel 2 mit Li beladen und als Kathode in einer Lithiumionen-Batterie mit dem selben Aufbau wie in Beispiel 2 (nicht erfindungsgemäss) verwendet. Fig. 18 zeigt die stabilen Verlauf der Entladezeit, die über die Anzahl der Entlade- und Ladezyklen aufgetragen ist, dieser Batterie über mehrere hundert Zyklen und demonstriert, dass eine Tiefentladung im Bereich von 0,05 V - 3,61 V erreicht wurde.

### Beispiel 8

Eine Kupferfolie (Dicke 0,1 mm, Durchmesser 10 mm) wurde mit Hopeit beschichtet analog der Beschreibung von Chung, S.-Y. et al. in Nature Mat. 2002, 1, 123-128, und als Kathode in einer Lithiumionen-Batterie mit dem selben prinzipiellen Aufbau wie in Beispiel 2 (nicht erfindungsgemäss) verwendet. Fig. 19 zeigt den stabilen Verlauf der Entladezeit, die über die Anzahl der Entlade- und Ladezyklen aufgetragen ist, dieser Batterie über mehrere hundert Zyklen und demonstriert, dass eine Tiefentladung im Bereich von 0,05 V - 3,61 V erreicht wurde.

### Beispiel 9

Ein käufliches, handelsübliches phosphatiertes Stahlblech (Dicke 0,5 mm, Durchmesser 10 mm), das auf einer Oberfläche eine Phosphatierungsschicht aus Hopeit enthält, wurde als Kathode ohne Zusatz von Graphit und Binder in einer Lithiumionen-Batterie mit dem selben prinzipiellen Aufbau wie in Beispiel 2 (nicht erfindungsgemäss) verwendet. Fig. 20 zeigt den stabilen Verlauf der Entladezeit, die über die Anzahl der Entlade- und Ladezyklen aufgetragen ist, dieser Batterie über mehrere hundert Zyklen und demonstriert, dass eine Tiefentladung im Bereich von 0,05 V - 3,61 V erreicht wurde.

### Beispiel 10

Ein Zeolith mit Sodalith-Struktur wurde wie in Beispiel 2 mit Li beladen und als Elektrode in einer elektrochemischen Speichereinheit mit dem selben Aufbau wie in Beispiel 2 verwendet (Chung, S.-Y. et al. in Nature Mat. 2002, 1, 123-128). Fig. 26 zeigt, dass diese Speichereinheit mit hohen Strömen (1 mA) auf über 4 V wie ein Kondensator aufgeladen werden kann. Die Entladekurve zeigt dann zuerst die starke Selbstentladung eines Kondensators, geht dann aber in das konstante Spannungsniveau einer Batterie über.

**Patentansprüche**

1. Verwendung eines kristallinen Materials mit einer Struktur, welche mindestens umfasst

    a) 2 bis 193 Atom-% strukturbildende Ionen M in Form einer $(MX_4)^{n-}$-Koordinationspolyeder umfassenden Gitterstruktur, wobei M aus einem oder mehreren Elementen der Gruppen 2-15 ausgewählt ist,
    b) 8 bis 772 Atom-% Anionen X in Form einer $(MX_4)^{n-}$-Koordinationspolyeder umfassenden Gitterstruktur, wobei n = eine Zahl von 2-4, X aus einem oder mehreren Elementen der Gruppen 16 und 17 ausgewählt ist, vorzugsweise Sauerstoff ist, und ein Anteil von bis zu 25,01 % der Anionen X durch ein Halogenidion wie $F^-$ oder $Cl^-$ oder durch $OH^-$ ersetzt sein können,
    c) 0 bis 5 Atom-% nicht-bewegliche strukturbildende Kationen von einem oder mehreren Elementen der Gruppen 3-13 des Periodensystems und
    d) > 0 bis 46 Atom-% bewegliche Kationen, ausgewählt aus Elementen der Gruppe 1 oder Gruppe 11 des Periodensystems,

    welche Struktur mindestens einen freien oder mit einer oder mehreren Spezies der beweglichen Kationen ganz oder teilweise gefüllten Kanal aufweist, der durch die Elementarzelle der Struktur hindurchgeht,
    und wobei die Struktur eine Hopeit- oder Zeolith-Gitterstruktur darstellt,
    als Kondensator-Elektrodenmaterial in nicht-wässrigen Systemen.

2. Verwendung nach Anspruch 1, **dadurch gekennzeichnet, dass** das Material als Einzelkristall oder als anisotropes mikrokristallines oder nanokristallines Material, in dem die Kanäle bevorzugt in einer Raumrichtung ausgerichtet sind, vorliegt.

3. Verwendung nach Anspruch 1 oder 2, **dadurch gekennzeichnet, dass** die austauschbaren Kationen aus der Gruppe aus Li, Na, K und Ag ausgewählt sind.

4. Verwendung nach einem der Ansprüche 1 bis 3, **dadurch gekennzeichnet, dass** die nicht-austauschbaren strukturbildenden Kationen von Übergangsmetallen aus den Gruppen 3-12 aus Zn, Mn, Fe, Co, Ni, Cr, V, Sc, Ti, Cu und Al ausgewählt sind.

5. Verwendung nach Anspruch 4, **dadurch gekennzeichnet**, das die Zeolith-Gitterstruktur aus einer der folgenden Strukturen gemäß der Nomenklatur der International Zeolite Association (ZA) ausgewählt ist: ABW ((BW)A-Li), ANA (Analcim), CAN (Cancrinit), CHA (Chabasit), ERI (Erionit), FAU (Faujasit), GIS (Gismondin), GME (Gmelinit), HEU (Heulandit), MOR (Mordenit), NAT (Natrolith), PHI (Phillipsit) oder SOD (Sodalith).

6. Verwendung nach einem der Ansprüche 1-5, **dadurch gekennzeichnet, dass** das kristalline Material wie in einem der Ansprüche 1-5 definiert auf einem elektronisch leitenden Substratmaterial vorliegt, welches aus der Gruppe, die aus Metallen, Metalllegierungen und elektrisch leitenden Kunststoffen besteht, ausgewählt ist.

7. Verwendung nach Anspruch 6, **dadurch gekennzeichnet, dass** das kristalline Material ohne Bindemittel oder Füllmittel auf dem Substratmaterial vorliegt.

8. Kondensator, umfassend mindestens eine Elektrode, welche das kristalline Material wie in einem der Ansprüche 1-5 definiert umfasst.

9. Kondensator nach Anspruch 8, **dadurch gekennzeichnet, dass** er ferner einen nicht-wässrigen Elektrolyten umfasst.

10. Kondensator nach Anspruch 8 oder 9, **dadurch gekennzeichnet, dass** es sich um einen Doppelschicht-kondensator handelt.

11. Kondensator nach einem der Ansprüche 8-10, **dadurch gekennzeichnet, dass** es sich um einen Lithium-Kondensator handelt.

12. Kondensator nach einem der Ansprüche 8-11, **dadurch gekennzeichnet, dass** er eine maximale Betriebsspannung von mehr als 2,5 V aufweist.

**Claims**

1. Use of a crystalline material with a structure, which comprises at least

   a) 2 to 193 atom % structure-building ions M in the form of a lattice structure comprising $(MX_4)^{n-}$-coordination polyhedrons, wherein M is selected from one or more elements of groups 2-15,
   b) 8 to 772 atom % anions X in the form of a lattice structure comprising $(MX_4)^{n-}$-coordination polyhedrons, wherein n = a number from 2-4, X is selected from one or more elements of groups 16 and 17, preferably oxygen, and a portion of up to 25.01 % of the anions X may be replaced by a halogenide ion such as $F^-$ or $Cl^-$ or by $OH^-$,
   c) 0 to 5 atom % non-mobile structure-building cations of one or more elements from groups 3-13 of the periodic table of elements, and
   d) > 0 to 46 atom % mobile cations, selected from elements from group 1 or group 11 of the periodic table of elements,

   which structure has at least one channel that is free or is filled completely or partially with one or more species of the mobile cations, which extends through the elementary cell of the structure,
   and wherein the structure represents a hopeit or zeolite lattice structure,
   as capacitor electrode material in non-aqueous systems.

2. The use according to Claim 1, **characterized in that** the material is present as a single crystal or as an anisotropic microcrystalline or nanocrystalline material, in which the channels are, preferably, oriented in one direction in space.

3. The use according to Claim 1 or 2, **characterized in that** the exchangeable cations are selected from the group consisting of Li, Na, K and Ag.

4. The use according to any one of the claims 1 to 3, **characterized in that** the non-exchangeable structure-building cations of transition metals from the groups 3-12 are selected among Zn, Mn, Fe, Co, Ni, Cr, V, Sc, Ti, Cu and Al.

5. The use according to Claim 4, **characterized in that** the zeolite lattice structure is selected from one of the following structures according to the nomenclature of the International Zeolite Association (ZA) : ABW ((BW)A-Li), ANA (Analcime), CAN (Cancrinite), CHA (Chabasite), ERI (Erionite), FAU (Faujasite), GIS (Gismondite), GME (Gmelinite), HEU (Heulandite), MOR (Mordenite), NAT (Natrolite), PHI (Phillipsite) or SOD (Sodalite).

6. The use according to any one of the claims 1 to 5, **characterized in that** the crystalline material, as defined in any one of the claims 1-5, is present on an electronically conducting substrate material, which is selected from the group consisting of metals, metal alloys and electrically conducting plastics.

7. The use according to Claim 6, **characterized in that** the crystalline material is present without binding agents or filling agents on the substrate material.

8. A capacitor, comprising at least one electrode, which comprises the crystalline material as defined in any one of the claims 1-5.

9. The capacitor according to claim 8, **characterized in that** it further comprises a non-aqueous electrolyte.

10. The capacitor according to claims 8 or 9, **characterized in that** it is a double-layer capacitor.

11. The capacitor according to any one of the claims 8 to 10, **characterized in that** it is a lithium capacitor.

12. The capacitor according to any one of the claims 8 to 11, **characterized in that** it exhibits a maximum operating voltage of more than 2.5 V.

**Revendications**

1. Utilisation d'un matériau cristallin avec une structure, laquelle comprend au moins

a) 2 à 193 % en atomes d'ions structurants M sous la forme d'une structure réticulaire comprenant des polyèdres de coordination $(MX_4)^{n-}$, dans laquelle M est choisi parmi un ou plusieurs éléments des groupes 2 à 15,

b) 8 à 772 % en atomes d'anions X sous la forme d'une structure réticulaire comprenant des polyèdres de coordination $(MX_4)^{n-}$, dans laquelle n = un chiffre de 2 à 4, X est choisi parmi un ou plusieurs éléments des groupes 16 et 17, de préférence est de l'oxygène, et une fraction pouvant aller jusqu'à 25,01 % des anions X peut être remplacée par un ion halogénure tel que $F^-$ ou $Cl^-$ ou par $OH^-$,

c) 0 à 5 % en atomes de cations structurants non mobiles d'un ou de plusieurs éléments des groupes 3 à 13 du tableau périodique, et

d) > 0 à 46 % en atomes de cations mobiles, choisis parmi des éléments du groupe 1 ou du groupe 11 du tableau périodique,

laquelle structure présente au moins un canal libre ou un canal rempli en totalité ou en partie d'une ou de plusieurs espèces des cations mobiles, qui traverse la cellule élémentaire de la structure,

et dans laquelle la structure constitue une structure réticulaire à base de hopeite ou de zéolithe,

en tant que matériau d'électrode de condensateur dans des systèmes non aqueux.

2. Utilisation selon la revendication 1, **caractérisée en ce que** le matériau est présent sous la forme d'un monocristal ou sous la forme d'un matériau microcristallin ou nanocristallin anisotrope, dans lequel les canaux sont orientés de manière préférée dans une direction spatiale.

3. Utilisation selon la revendication 1 ou 2, **caractérisée en ce que** les cations interchangeables sont choisis parmi le groupe composé de Li, Na, K et Ag.

4. Utilisation selon l'une quelconque des revendications 1 à 3, **caractérisée en ce que** les cations structurants non échangeables de métaux de transition sont choisis parmi les groupes 3 à 12 composés de Zn, Mn, Fe, Co, Ni, Cr, V, Sc, Ti, Cu et Al.

5. Utilisation selon la revendication 4, **caractérisée en ce que** la structure réticulaire à base de zéolithe est choisie parmi une des structures suivantes selon la nomenclature de l'International Zeolite Association (ZA) : ABW (BW)A-Li), ANA (analcime), CAN (cancrinite), CHA (chabazite), ERI (érionite), FAU (faujasite), GIS (gismondite), GME (gmélinite), HEU (heulandite), MOR (mordénite), NAT (natrolite), PHI (phillipsite) ou SOD (sodalite).

6. Utilisation selon l'une quelconque des revendications 1 à 5, **caractérisée en ce que** le matériau cristallin tel que défini dans l'une quelconque des revendications 1 à 5 est présent sur un matériau de substrat électroniquement conducteur, lequel est choisi parmi le groupe qui consiste en des métaux, des alliages de métaux et des matériaux plastiques électroconducteurs.

7. Utilisation selon la revendication 6, **caractérisée en ce que** le matériau cristallin est présent sans liant ou sans charge sur le matériau de substrat.

8. Condensateur comprenant au moins une électrode, qui comprend le matériau cristallin tel que défini dans l'une quelconque des revendications 1 à 5.

9. Condensateur selon la revendication 8, **caractérisé en ce qu'**il comprend en outre un électrolyte non aqueux.

10. Condensateur selon la revendication 8 ou 9, **caractérisé en ce qu'**il s'agit d'un condensateur à double couche.

11. Condensateur selon l'une quelconque des revendications 8 à 10, **caractérisé en ce qu'**il s'agit d'un condensateur au lithium.

12. Condensateur selon l'une quelconque des revendications 8 à 11, **caractérisé en ce qu'**il présente une tension de fonctionnement maximale supérieure à 2,5 V.

Fig. 1A

Fig. 1B

Fig. 1C

Fig. 2A

**Fig. 2B**

**Fig. 2C**

Fig. 3A

Fig. 3B

Fig. 3C

Fig. 3D

Fig. 4A

Fig. 4B

Fig. 4C

Fig. 5A

**Fig. 5B**

**Fig. 5C**

Fig. 6A

Fig. 6B

**Fig. 6C**

**Fig. 6D**

**Fig. 7A**

**Fig. 7B**

Fig. 7C

Fig. 7D

Fig. 8A

Fig. 8B

Fig. 8C

Fig. 8D

**Fig. 8E**

**Fig. 9A**

c
a——b

**Fig. 9B**

c——b
a

**Fig. 9C**

Fig. 10A

Fig. 10B

Fig. 10C

Fig. 11A

**Fig. 11B**

**Fig. 11C**

Fig. 12A

Fig. 12B

**Fig. 12C**

Fig. 12D

a3
a1————a2

Fig. 13A

a3
a1————a2

Fig. 13B

**Fig. 13C**

**Fig. 13D**

**Fig. 13E**

**Fig. 14**

**Fig. 15**

Entladezeit (Sekunden) vs. Anzahl der Entlade- u. Ladezyklen

**Fig. 16**

Entladezeit (Sekunden) vs. Anzahl der Lade- u. Entladezyklen

Fig. 17

Fig. 18

**Fig. 19**

**Fig. 20**

**Fig. 21**

**Fig. 22**

**Fig. 23**

**Fig. 24**

**Fig. 25**

**Fig. 26**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 08021669 A
- WO 2007035432 A2
- WO 19090 A
- US 2950952 A
- US 841812 A
- US 4333859 A
- US 4124686 A
- US 4544538 A
- US 6709644 B2
- US 4503023 A
- GB 2076793 A
- WO 0351461 A
- US 2882244 A
- US 3130007 A
- DE 2030105 A1

**In der Beschreibung aufgeführte Nicht-Patentliteratur**

- **RAVET.** *Journal of Power Sources,* 2001, 97-98, 503-507
- **CHUNG, S.-Y. et al.** *Nature Mat.,* 2002, vol. 1, 123-128
- **HARRISON, W. T. A. et al.** *Chem. Mater.,* 1996, vol. 8, 145-151